(19) Europäisches Patentamt
European Patent Office
Office européen des brevets

(11) EP 1 609 360 A1

(12) EUROPEAN PATENT APPLICATION

(43) Date of publication:
28.12.2005 Bulletin 2005/52

(51) Int Cl.7: A01N 37/38

(21) Application number: 05103922.0

(22) Date of filing: 11.05.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 17.06.2004 JP 2004179465

(71) Applicant: Sumitomo Chemical Company, Limited
Tokyo 104-8260 (JP)

(72) Inventor: Soma, Masato
Osaka (JP)

(74) Representative: Henkel, Feiler & Hänzel
Möhlstrasse 37
81675 München (DE)

# (54) Fungicidal Composition

(57) A fungicidal composition comprising:
an amide compound represented by formula (1)

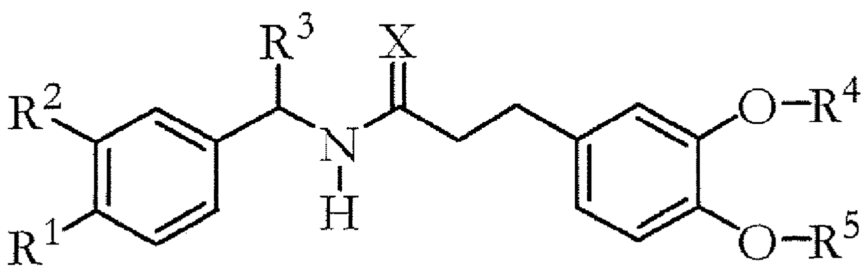

( 1 )

and dimethomorph as active ingredients, and a method for controlling plant diseases applying effective amount of an amide compound represented by formula (1) and dimethomorph to plant(s) or soil where plant(s) are growing.

EP 1 609 360 A1

**Description**

BACKGROUND OF THE INVENTION

Field of the Invention

The present invention relates to a fungicidal composition, especially which has an excellent controlling activity against plant diseases due to Phycomycetes (Oomycetes).

Background art

Various fungicides have been developed for controlling plant diseases due to Phycomycetes (Oomycetes) and so on, but a fungicide having higher activity is always required.

SUMMARY OF THE INVENTION

The present invention provides a fungicidal composition (which may refer as the present invention composition, hereinafter) comprising:

(I) an amide compound represented by formula (1)

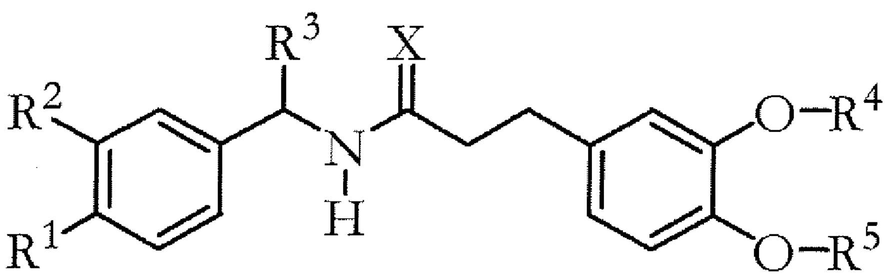

( 1 )

wherein,
X represents an oxygen atom or a sulfur atom,
$R^1$ represents a hydrogen atom, a halogen atom, a C1-C4 alkyl group, a C1-C4 haloalkyl group, a C2-C4 alkenyl group, a C2-C4 alkynyl group, a C1-C4 alkoxy group, a C1-C4 haloalkoxy group or a cyano group,
$R^2$ represents a hydrogen atom, a halogen atom, a C1-C4 alkyl group, a C1-C4 haloalkyl group, a C2-C4 alkenyl group or a C2-C4 alkynyl group;
or both of $R^1$ and $R^2$ are combined together to represent a C3-C5 polymethylene group or 1,3-butadiene-1,4-diyl group,
$R^3$ represents a hydrogen atom, a C1-C3 alkyl group or a cyano group,
$R^4$ represents a C1-C3 alkyl group,
$R^5$ represents a C1-C4 alkyl group, a C3-C4 alkenyl group or a C3-C4 alkynyl group (which may refer as the compound (I), hereinafter);
and
(II) dimethomorph (which may refer as the compound (II), hereinafter);
as active ingredients.

And it also provides a plant diseases controlling method which comprises applying effective amount of the compound (I) and the compound (II) to plant(s) or soil where plant(s)are growing.

DETAILED DESCRIPTION OF THE INVENTION

First, the compound (I) is explained.
In the formula (1),
in the representation of $R^1$,
the halogen atom includes a fluorine atom, a chlorine atom, a bromine atom and an iodine atom; the C1-C4 alkyl group includes a methyl group, an ethyl group, a propyl group, an isopropyl group, a butyl group, an isobutyl group, a sec-butyl group and tert-butyl group; the C1-C2 alkyl group includes a methyl group and an ethyl group; the C1-C4 haloalkyl group includes, for example, a fluoromethyl group, a difluoromethyl group and a trifluoromethyl group; the C2-C4 alkenyl group includes, for example, a vinyl group, a 1-methylvinyl group, a 1-propenyl group, a 2-propenyl group, a 1-methyl-2-propenyl group, a 2-methyl-2-propenyl group, a 2-butenyl group and a 3-butenyl group; the C2-C4 alkynyl group includes, for example, an ethynyl group, a 1-propynyl group, a 2-propynyl group, a 1-methyl-2-propynyl group, a 2-butynyl group or a 3-butynyl group; the C1-C4 alkoxy group includes a methoxy group, an ethoxy group, a propoxy group, an isopropoxy group, a butoxy group, an isobutoxy group, a sec-butoxy group and a tert-butoxy group; the C1-C4 haloalkoxy group includes, for example, a fluoromethoxy group, a difluoromethoxy group, a trifluoromethoxy group, a 2, 2, 2-trifluoroethoxy group, a 1,1,2,2,-tetrafluoroethoxy group and a 2-fluoroethoxy group.

In the representation of $R^2$, the halogen atom includes a fluorine atom, a chlorine atom, a bromine atom and an iodine atom; the C1-C4 alkyl group includes a methyl group, an ethyl group, a propyl group, an isopropyl group, a butyl group, an isobutyl group, a sec-butyl group and tert-butyl group; the C1-C2 alkyl group includes a methyl group and an ethyl group; the C1-C4 haloalkyl group includes, for example, a fluoromethyl group, a difluoromethyl group and a trifluoromethyl group; the C2-C4 alkenyl group includes, for example, a vinyl group, a 1-methylvinyl group, a 1-propenyl group, a 2-propenyl group, a 1-methyl-2-propenyl group, a 2-methyl-2-propenyl group, a 2-butenyl group and a 3-butenyl group; the C2-C4 alkynyl group includes, for example, an ethynyl group, a 1-propynyl group, a 2-propynyl group, a 1-methyl-2-propynyl group, a 2-butynyl group or a 3-butynyl group.

The C3-C5 polymethylene group represented by both of $R^1$ and $R^2$ being combined together includes a trimethylene group, a tetramethylene group and a pentamethylene group; the C3-C4 polymethylene group includes a trimethylene group and tetramethylene group.

In the representation of $R^3$, the C1-C3 alkyl group includes a methyl group, an ethyl group, a propyl group and an isopropyl group.

In the representation of $R^4$, the C1-C3 alkyl group includes a methyl group, an ethyl group, a propyl group and an isopropyl group; the C1-C2 alkyl group includes a methyl group and an ethyl group.

In the representation of $R^5$, the C1-C4 alkyl group includes a methyl group, an ethyl group, a propyl group, an isopropyl group, a butyl group, an isobutyl group, a sec-butyl group and tert-butyl group; the C1-C2 alkyl group includes a methyl group and an ethyl group; the C3-C4 alkenyl group includes, for example, a 2-propenyl group, a 1-methyl-2-propenyl group and a 2-methyl-2-propenyl group; the C3 alkenyl group includes a 2-propenyl group; the C3-C4 alkynyl group includes a 2-propynyl group, a 1-methyl-2-propynyl group, a 2-butynyl group or a 3-butynyl group; the C3 alkynyl group includes a 2-propynyl group.

The mode of the compound (I) includes, for example, wherein X is an oxygen atom or a sulfur atom, $R^1$ is a halogen atom or a C1-C2 alkyl group, $R^2$ is a hydrogen atom, a halogen atom or a C1-C2 alkyl group; or both of $R^1$ and $R^2$ are combined together to be a C3-C4 polymethylene group or 1,3-butadiene-1,4-diyl group, $R^3$ is a hydrogen atom, $R^4$ is a C1-C2 alkyl group, and $R^5$ is a C3 alkynyl group in the formula (1); wherein X is an oxygen atom, $R^1$ is a hydrogen atom, a halogen atom or a C1-C2 alkyl group, $R^2$ is a hydrogen atom or a halogen atom, or both of $R^1$ and $R^2$ are combined together to be a C3-C4 polymethylene group or 1,3-butadiene-1,4-diyl group, $R^3$ is a cyano group, $R^4$ is a C1-C2 alkyl group, and $R^5$ is a C1-C2 alkyl group, a C3 alkenyl group or a C3 alkynyl group in the formula (1).

Examples of the compound (I) are shown in the Table 1 with compound No.

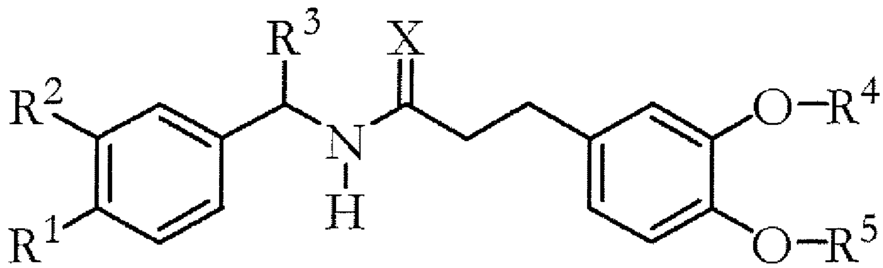

( 1 )

Table 1

| Compound Number | $R^1$ | $R^2$ | $R^3$ | $R^4$ | $R^5$ | X |
|---|---|---|---|---|---|---|
| I-1 | $CH_3$ | H | H | $CH_3$ | $CH_2C\equiv CH$ | O |
| I-2 | $CH_3$ | $CH_3$ | H | $CH_3$ | $CH_2C\equiv CH$ | O |
| I-3 | $CH_3$ | H | H | $CH_3$ | $CH_2C\equiv CH$ | S |
| I-4 | $CH_3$ | $CH_3$ | H | $CH_3$ | $CH_2C\equiv CH$ | S |
| I-5 | H | H | $C\equiv N$ | $CH_3$ | $CH_2C\equiv CH$ | O |
| I-6 | $CH_3$ | H | $C\equiv N$ | $CH_3$ | $CH_2C\equiv CH$ | O |
| I-7 | $CH_3$ | H | $C\equiv N$ | $CH_3$ | $CH_2CH_3$ | O |
| I-8 | $CH_2CH_3$ | H | H | $CH_3$ | $CH_2C\equiv CH$ | O |
| I-9 | $CH_2CH_3$ | H | $C\equiv N$ | $CH_3$ | $CH_2C\equiv CH$ | O |
| I-10 | Cl | H | H | $CH_3$ | $CH_2C\equiv CH$ | O |
| I-11 | Cl | Cl | H | $CH_3$ | $CH_2C\equiv CH$ | O |
| I-12 | Cl | H | H | $CH_2CH_3$ | $CH_2C\equiv CH$ | O |
| I-13 | Cl | H | H | $CH_3$ | $CH_2C\equiv CH$ | S |
| I-14 | Cl | Cl | H | $CH_3$ | $CH_2C\equiv CH$ | S |
| I-15 | Cl | H | H | $CH_2CH_3$ | $CH_2C\equiv CH$ | S |
| I-16 | Cl | H | $C\equiv N$ | $CH_3$ | $CH_2C\equiv CH$ | O |
| I-17 | Cl | H | $C\equiv N$ | $CH_3$ | $CH_2CH_3$ | O |
| I-18 | Br | H | H | $CH_3$ | $CH_2C\equiv CH$ | O |
| I-19 | Br | H | H | $CH_3$ | $CH_2C\equiv CH$ | S |
| I-20 | Br | H | $C\equiv N$ | $CH_3$ | $CH_2C\equiv CH$ | O |
| I-21 | Br | H | $C\equiv N$ | $CH_3$ | $CH_2CH_3$ | O |
| I-22 | $-CH_2-CH_2-CH_2-$ | | H | $CH_3$ | $CH_2C\equiv CH$ | O |
| I-23 | $-CH_2-CH_2-CH_2-$ | | H | $CH_3$ | $CH_2C\equiv CH$ | S |
| I-24 | $-CH_2-CH_2-CH_2-$ | | $C\equiv N$ | $CH_3$ | $CH_2C\equiv CH$ | O |
| I-25 | $-CH_2-CH_2-CH_2-CH_2-$ | | H | $CH_3$ | $CH_2C\equiv CH$ | O |
| I-26 | $-CH_2-CH_2-CH_2-CH_2-$ | | H | $CH_3$ | $CH_2C\equiv CH$ | S |
| I-27 | $-CH_2-CH_2-CH_2-CH_2-$ | | $C\equiv N$ | $CH_3$ | $CH_2C\equiv CH$ | O |
| I-28 | $-CH=CH-CH=CH-$ | | H | $CH_3$ | $CH_2C\equiv CH$ | O |
| I-29 | $-CH=CH-CH=CH-$ | | H | $CH_3$ | $CH_2C\equiv CH$ | S |

Next, the production methods of the compound (I) are described.

The compound shown by the formula (2-1) which X is an oxygen atom in the compound (I) and the compound shown by the formula (2-2) which X is a sulfur atom in the compound (I) can be produced, for example, according to the scheme described below.

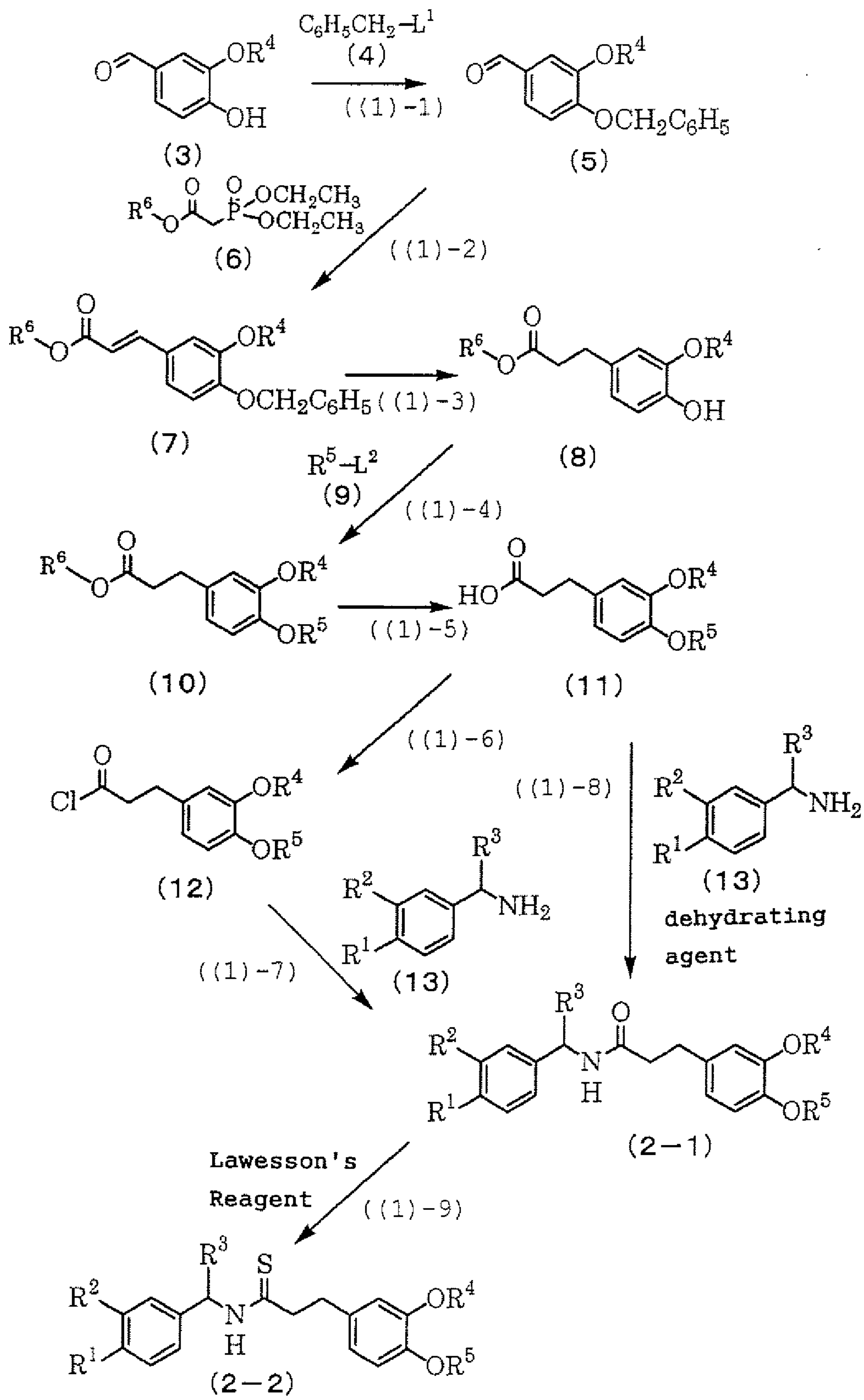


wherein in the formula,

$R^1$ represents a hydrogen atom, a halogen atom, a C1-C4 alkyl group, a C1-C4 haloalkyl group, a C2-C4 alkenyl group, a C2-C4 alkynyl group, a C1-C4 alkoxy group, a C1-C4haloalkoxy group or a cyano group,

$R^2$ represents a hydrogen atom, a halogen atom, a C1-C4 alkyl group, a C1-C4 haloalkyl group, a C2-C4 alkenyl group

or a C2-C4 alkynyl group;
or both of $R^1$ and $R^2$ are combined together to represent a C3-C5 polymethylene group or 1,3-butadiene-1,4-diyl group,
$R^3$ represents a hydrogen atom, a C1-C3 alkyl group or a cyano group,
$R^4$ represents a C1-C3 alkyl group,
$R^5$ represents a C1-C4 alkyl group, a C3-C4 alkenyl group or a C3-C4 alkynyl group,
$R^6$ represents a methyl group, an ethyl group or propyl group, $L^1$ represents a chlorine atom or a bromine atom, $L^2$ represents a halogen atom.

Step ((1)-1)

The compound shown by the formula (5) can be produced by making the compound shown by the formula (3) react with the compound shown by the formula (4).
The reaction is carried out in the presence of a solvent or absence of a solvent, and usually in the presence of a base.
The solvent used for the reaction includes, for example, ethers such as 1,4-dioxane, tetrahydrofuran, ethyleneglycoldimethylether, tert-butylmethylether and the like; aliphatic hydrocarbons such as hexane, heptane, octane and the like; aromatic hydrocarbons such as toluene, xylene and the like; halogenated hydrocarbons such as chlorobenzene and the like; esters such as ethyl acetate, butyl acetate and the like; nitriles such as acetonitrile, butyronitrile and the like; acid amides such as N,N-dimethylformamide and the like; sulfoxides such as dimethyl sulfoxide and the like and the mixture thereof.
The base used for the reaction includes, for example, carbonates such as sodium carbonate, potassium carbonate and the like, alkali metal hydrides such as sodium hydride, potassium hydride, tertiary amines such as triethylamine, diisopropylethylamine, 1,8-diazabicyclo[5.4.0]undec-7-ene, 1,5-diazabicyclo[4.3.0]non-5-ene and the like; nitrogen-contained aromatic compounds such as pyridine, 4-dimethylaminopyridine.
The amount of the reagents used for the reaction is usually 1 to 10 moles of a base and usually 1 to 5 moles of the compound shown by the formula (4) based on 1 mole of the compound of the formula (3).
The reaction temperature is usually in the range of 0 to 100 °C, and the reaction time is usually 0.1 to 24 hours.
After completion of the reaction, the compound shown by the formula (5) can be isolated by subjecting to post-treatment such as the reaction mixture is poured into water, extracted with organic solvent, and the organic solvent being dried and concentrated. The isolated the compound shown by the formula (5) can be purified by a technique such as chromatography, recrystallization and the like.

Step ((1)-2)

The compound shown by the formula (7) can be produced by making the compound shown by the formula (5) react with the compound shown by the formula (6).
The reaction is carried out in the presence of a solvent, and in the presence of a base.
The solvent used for the reaction includes, for example, ethers such as 1,4-dioxane, tetrahydrofuran, ethyleneglycoldimethylether, tert-butylmethylether and the like; aliphatic hydrocarbons such as hexane, heptane, octane and the like; aromatic hydrocarbons such as toluene, xylene and the like; halogenated hydrocarbons such as chlorobenzene and the like; acid amides such as N,N-dimethylformamide and the like; sulfoxides such as dimethyl sulfoxide, water and the like and the mixture thereof.
The base used for the reaction includes, for example, carbonates such as sodium carbonate, potassium carbonate and the like, alkali metal hydrides such as sodium hydride, potassium hydride, metal alkoxides such as sodium methoxide, sodium ethoxide, potassium-tert-butoxide .
The amount of the reagents used for the reaction is usually 1 to 10 moles of a base and usually 1 to 5 moles of the compound shown by the formula (6) based on 1 mole of the compound of the formula (5).
The reaction temperature is usually in the range of -20 to 100 °C, and the reaction time is usually 0.1 to 24 hours.
After completion of the reaction, the compound shown by the formula (7) can be isolated by subjecting to post-treatment such as the reaction mixture is poured into water, extracted with organic solvent, and the organic solvent being dried and concentrated. The isolated the compound shown by the formula (7) can be purified by a technique such as chromatography, recrystallization and the like.

Step ((1)-3)

The compound shown by the formula (8) can be produced by making the compound shown by the formula (7) react with hydrogen in the presence of a hydrogenation catalyst.

The reaction is carried out usually under hydrogen atmosphere and usually in the presence of a solvent.
The solvent used for the reaction includes, for example, alcohols such as methanol, ethanol, propanol and the like; esters such as ethyl acetate, butyl acetate and the like; ethers such as tetrahydrofuran, 1,4-dioxane and the like and the mixture thereof.
The hydrogenation catalyst used to the reaction includes, for example, transition metal compound such as palladium charcoal, palladium hydroxide, Raney® nickel, platinum oxide and the like.
The amount of hydrogenation catalyst used to the reaction is usually 0.001 to 0.5 moles per 1 mole of the compound shown by the formula (7).
The reaction is usually carried out under hydrogen atmosphere of 1 to 100 atm.
The reaction can be carried out in the presence of an acid (hydrochloric acid and the like), if necessary.
The reaction temperature is usually in the range of -20 to 100 °C, the reaction time is usually in the range of 0.1 to 24 hours.
After completion of the reaction, the compound shown by the formula (8) can be isolated by subjecting to post-treatment such as the reaction mixture is filtered, and the filtrate being dried and concentrated. The isolated the compound shown by the formula (8) can be purified by a technique such as chromatography, recrystallization and the like.

Step ((1)-4)

The compound shown by the formula (10) can be produced by making the compound shown by the formula (8) react with the compound shown by the formula (9).
The reaction is carried out in the presence of a solvent or absence of a solvent, and usually in the presence of a base.
The solvent used for the reaction includes, for example, ethers such as 1,4-dioxane, tetrahydrofuran, ethyleneglycoldimethylether, tert-butylmethylether and the like; aliphatic hydrocarbons such as hexane, heptane, octane and the like; aromatic hydrocarbons such as toluene, xylene and the like; halogenated hydrocarbons such as chlorobenzene and the like; esters such as ethyl acetate, butyl acetate and the like; nitriles such as acetonitrile, butyronitrile and the like; acid amides such as N,N-dimethylformamide and the like; sulfoxides such as dimethyl sulfoxide and the like and the mixture thereof.
The base used for the reaction includes, for example, carbonates such as sodium carbonate, potassium carbonate and the like; tertiary amines such as triethylamine, diisopropylethylamine, 1,8-diazabicyclo[5.4.0]undec-7-ene, 1,5-diazabicyclo[4.3.0]non-5-ene and the like; nitrogen-contained aromatic compounds such as pyridine, 4-dimethylaminopyridine.
The amount of the reagents used for the reaction is usually 1 to 10 moles of a base and usually 1 to 5 moles of the compound shown by the formula (9) based on 1 mole of the compound of the formula (8).
The reaction temperature is usually in the range of 0 to 100 °C, and the reaction time is usually 0.1 to 24 hours.
After completion of the reaction, the compound shown by the formula (10) can be isolated by subjecting to post-treatment such as organic solvent is added to the reaction mixture if necessary, and then filtered, the filtrate being concentrated. The isolated the compound shown by the formula (10) can be purified by a technique such as distillation, chromatography, recrystallization and the like.

Step ((1)-5)

The compound shown by the formula (11) can be produced by making the compound shown by the formula (10) react with water in the presence of a base.
The reaction is usually carried out in the presence of water and an organic solvent.
The organic solvent used for the reaction includes, for example, ethers such as 1,4-dioxane, tetrahydrofuran, ethyleneglycoldimethylether, tert-butylmethylether and the like; aromatic hydrocarbons such as toluene, xylene and the like; halogenated hydrocarbons such as chlorobenzene and the like; nitriles such as acetonitrile, butyronitrile and the like; alcohols such as methanol, ethanol, propanol and the like and the mixture thereof.
The base used for the reaction includes, for example, alkali metal hydroxide such as lithium hydroxide, sodium hydroxide, potassium hydroxide and the like.
The amount of the base used for the reaction is usually 1 to 10 moles per 1 mole of the compound shown by the formula (10).
The reaction temperature is usually in the range of 0 to 150 °C, and the reaction time is usually in the range of 0.1 to 24 hours.
After completion of the reaction, the compound shown by the formula (11) can be isolated by subjecting to post-treatment such as acidic water (hydrochloric acid and the like) is poured into the reaction mixture, extracted with

organic solvent, and the organic solvent being dried and concentrated. The isolated the compound shown by the formula (11) can be purified by a technique such as chromatography, recrystallization and the like, or it can be used for the reaction of next step as it is.

Step ((1)-6)

The compound shown by the formula (12) can be produced by making the compound shown by the formula (11) react with chlorinating agent.

The reaction is carried out in the presence of a solvent or absence of a solvent. The solvent used for the reaction includes, for example, ethers such as 1,4-dioxane, tetrahydrofuran, ethyleneglycoldimethylether, tert-butylmethylether and the like; aliphatic hydrocarbons such as hexane, heptane, octane and the like; aromatic hydrocarbons such as toluene, xylene and the like; halogenated hydrocarbons such as chlorobenzene and the like and the like and the mixture thereof.

The chlorinating agent used for the reaction includes, for example, thionyl chloride, oxalyl chloride and phosphorus oxychloride.

The amount of the reagents used for the reaction is usually 1 to 100 moles of a chlorinating agent based on 1 mole of the compound of the formula (11).

The reaction temperature is usually in the range of 30 to 150 °C, and the reaction time is usually in the range of 0.1 to 24 hours.

After completion of the reaction, the compound shown by the formula (12) can be isolated by subjecting to treatment such as the reaction mixture is concentrated. The isolated the compound shown by the formula (12) is usually used for the reaction of next step as it is.

Step ((1)-7)

The compound shown by the formula (2-1) can be produced by making the compound shown by the formula (12) react with the compound shown by the formula (13).

The reaction is carried out usually in the presence of a solvent and in the presence of a base.

The solvent used for the reaction includes, for example, ethers such as 1,4-dioxane, tetrahydrofuran, ethyleneglycoldimethylether, tert-butylmethylether and the like; aliphatic hydrocarbons such as hexane, heptane, octane and the like; aromatic hydrocarbons such as toluene, xylene and the like; halogenated hydrocarbons such as chlorobenzene and the like; esters such as ethyl acetate, butyl acetate and the kike; nitriles such as acetonitrile, butyronitrile and the like; acid amides such as N,N-dimethylformamide and the like; sulfoxides such as dimethyl sulfoxide and the mixture thereof.

The base used for the reaction includes, for example, carbonates such as sodium carbonate, potassium carbonate and the like; tertiary amines such as triethylamine, diisopropylethylamine, 1,8-diazabicyclo[5.4.0]undec-7-ene, 1,5-diazabicyclo[4.3.0]non-5-ene and the like; nitrogen-contained aromatic compounds such as pyridine, 4-dimethylaminopyridine.

The amount of the reagents used for the reaction is usually 1 to 10 moles of a base and usually 1 to 5 moles of the compound shown by the formula (13) based on 1 mole of the compound of the formula (12).

The reaction temperature is usually in the range of -20 to 100 °C, and the reaction time is usually in the range of 0.1 to 24 hours.

After completion of the reaction, the compound shown by the formula (2-1) can be isolated by subjecting to post-treatment such as (i) the reaction mixture is poured into water, extracted with organic solvent, and the organic layer is washed with an acidic water (diluted hydrochloric acid and the like) and/or a basic water (aqueous solution of sodium bicarbonate and the like) if necessary, then dried and concentrated; or (ii) a small amount of water is added to the reaction mixture, concentrated under reduced pressure, and the obtained solid being collected by filtration. The isolated the compound shown by the formula (2-1) can be purified by a technique such as chromatography, recrystallization and the like.

Step ((1)-8)

The compound shown by the formula (2-1) can also be produced by making the compound shown by the formula (11) react with the compound shown by the formula (13) in the presence of a dehydrating agent.

The reaction is carried out usually in the presence of a solvent.

The solvent used for the reaction includes, for example, acid amides such as N,N-dimethylformamide and the like; sulfoxides such as dimethyl sulfoxide; nitrogen-contained aromatic compounds such as pyridine, quinoline and the like and the mixture thereof.

The dehydrating agent used for the reaction includes carbodiimides such as 1-ethyl-3-(3-diethylaminopropyl) carbodiimide hydrochloride (referred as WSC hereinafter), 1,3-dicyclohexylcarbodiimide and the like.
The amount of the reagents used for the reaction is usually 1 to 3 moles of the compound shown by the formula (13) and usually 1 to 5 moles of dehydrating agent based on 1 mole of the compound of the formula (11).
The reaction temperature is usually in the range of 0 to 140 °C, and the reaction time is usually in the range of 0.1 to 24 hours.
After completion of the reaction, the compound shown by the formula (2-1) can be isolated by subjecting to post-treatment such as (i) the reaction mixture is poured into water, extracted with organic solvent, and the organic layer is washed with an acidic water (diluted hydrochloric acid and the like) and/or a basic water (aqueous solution of sodium bicarbonate and the like) if necessary, then dried and concentrated; or (ii) a small amount of water is added to the reaction mixture, concentrated under reduced pressure, and the obtained solid being collected by filtration. The isolated the compound shown by the formula (2-1) can be purified by a technique such as chromatography, recrystallization and the like.

Step ((1)-9)

The compound shown by the formula (2-2) can be produced by making the compound shown by the formula (2-1) react with 2,4-bis(4-methoxyphenyl)-1,3-dithia-2,4-diphosphetane-2,4-d isulfide (referred as "Lawesson's Reagent" hereinafter).
The reaction is usually carried out in the presence of a solvent.
The solvent used for the reaction includes, for example, ethers such as 1,4-dioxane, tetrahydrofuran, ethyleneglycoldimethylether, tert-butylmethylether and the like; aliphatic hydrocarbons such as hexane, heptane, octane and the like; aromatic hydrocarbons such as toluene, xylene and the like; halogenated hydrocarbons such as chlorobenzene and the like; nitriles such as acetonitrile, butyronitrile and the like; sulfoxides such as dimethyl sulfoxide and the like and the mixture thereof.
The amount of the Lawesson's Reagent used for the reaction is usually 1 to 10 moles based on 1 mole of the compound of the formula (2-1).
The reaction temperature is usually in the range of 50 to 150 °C, and the reaction time is usually 0.5 to 24 hours.
After completion of the reaction, the compound shown by the formula (2-2) can be isolated by subjecting to post-treatment such as water is added to the reaction mixture, then extracted with organic solvent, and the organic layer being dried and concentrated. The isolated the compound shown by the formula (2-2) can be purified by a technique such as chromatography, recrystallization and the like.
The compound shown by the formula (2-3) can also be produced by according to following scheme.

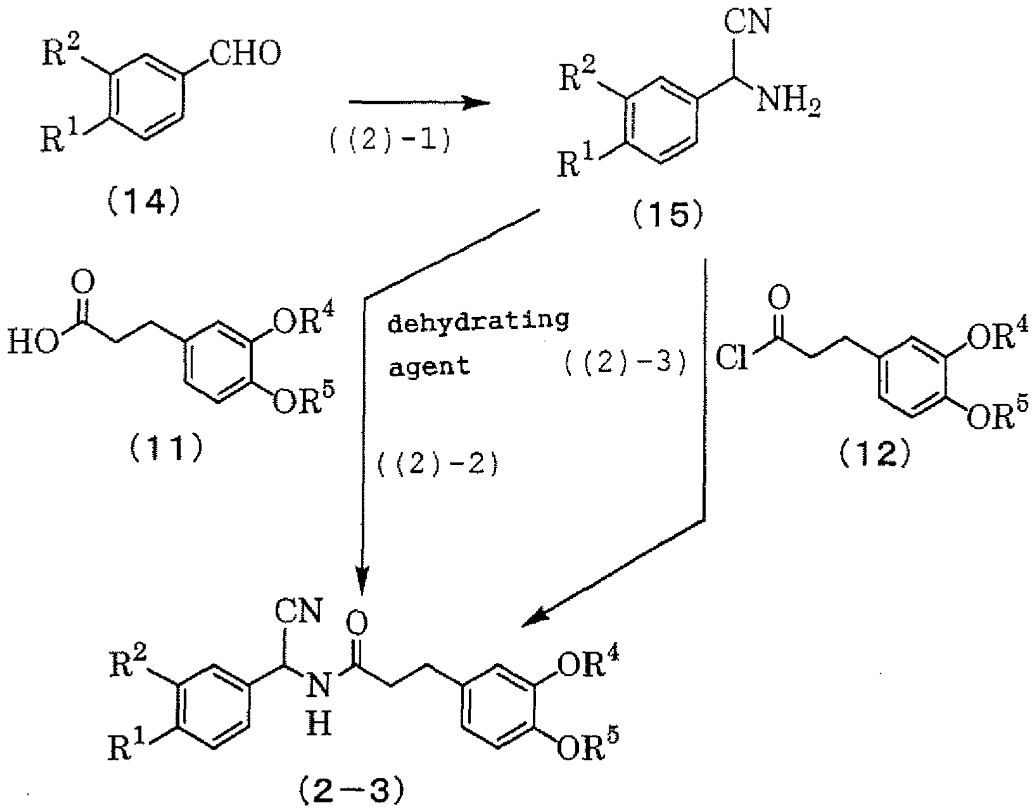


(14) (15) (11) (12) (2-3)

wherein, $R^1$, $R^2$, $R^4$ and $R^5$ have the same meaning defined above.

Step ((2)-1)

The compound shown formula (15) is, for example, described in Tetrahedron Letters, Vol. 25, No. 41, pp. 4583-4586, 1984 or United States Patent US4,041,045; or can be produced by the same method described in above mentioned literature. The compound shown by the formula (15) can be used for the reaction of next step after isolation, and it can be used for the reaction of next without isolation. Further, it can also be used for the reaction of next step as a hydrochloric salt of the compound shown by formula (15).

Step ((2)-2)

The compound shown by the formula (2-3) can also be produced by making the compound shown by the formula (11) react with the compound shown by the formula (15) in the presence of a dehydrating agent.
The reaction is carried out usually in the presence of a solvent and in the presence of a dehydrating agent.
The solvent used for the reaction includes, for example, acid amides such as N,N-dimethylformamide and the like; sulfoxides such as dimethyl sulfoxide; nitrogen-contained aromatic compounds such as pyridine, quinoline and the like and the mixture thereof.
The dehydrating agent used for the reaction includes carbodiimides such as WSC, 1, 3-dicyclohexylcarbodiimide and the like.
The amount of the reagents used for the reaction is usually 1 to 3 moles of the compound shown by the formula (15) and usually 1 to 5 moles of dehydrating agent based on 1 mole of the compound of the formula (11).
The reaction temperature is usually in the range of 0 to 140 °C, and the reaction time is usually in the range of 0.1 to 24 hours.
After completion of the reaction, the compound shown by the formula (2-3) can be isolated by subjecting to post-treatment such as (i) the reaction mixture is poured into water, extracted with organic solvent, and the organic layer is washed with an acid water (diluted hydrochloric acid and the like) and/or a basic water (aqueous solution of sodium bicarbonate and the like) if necessary, then dried and concentrated; or (ii) a small amount of water is added to the reaction mixture, concentrated under reduced pressure, and the obtained solid being collected by filtration. The isolated the compound shown by the formula (2-3) can be purified by a technique such as chromatography, recrystallization and the like.

Step ((2)-3)

The compound shown by the formula (2-3) can be produced by making the compound shown by the formula (15) react with the compound shown by the formula (12) in the presence of a base.
The reaction is carried out usually in the presence of a solvent and usually in the presence of a base.
The solvent used for the reaction includes, for example, ethers such as 1,4-dioxane, tetrahydrofuran, ethyleneglycoldimethylether, tert-butylmethylether and the like; aliphatic hydrocarbons such as hexane, heptane, octane and the like; aromatic hydrocarbons such as toluene, xylene and the like; halogenated hydrocarbons such as chlorobenzene and the like; esters such as ethyl acetate, butyl acetate and the kike; nitriles such as acetonitrile, butyronitrile and the like; acid amides such as N,N-dimethylformamide and the like; sulfoxides such as dimethyl sulfoxide and the mixture thereof.
The base used for the reaction includes, for example, carbonates such as sodium carbonate, potassium carbonate and the like; tertiary amines such as triethylamine, diisopropylethylamine, 1,8-diazabicyclo[5.4.0]undec-7-ene, 1,5-diazabicyclo[4.3.0]non-5-ene and the like; nitrogen-contained aromatic compounds such as pyridine, 4-dimethylaminopyridine.
The amount of the reagents used for the reaction is usually 1 to 10 moles of a base and usually 1 to 5 moles of the compound shown by the formula (15) based on 1 mole of the compound of the formula (12).
The reaction temperature is usually in the range of -20 to 100 °C, and the reaction time is usually in the range of 0.1 to 24 hours.
After completion of the reaction, the compound shown by the formula (2-3) can be isolated by subjecting to post-treatment such as (i) the reaction mixture is poured into water, extracted with organic solvent, and the organic layer is washed with an acidic water (diluted hydrochloric acid and the like) and/or a basic water (aqueous solution of sodium bicarbonate and the like) if necessary, then dried and concentrated; or (ii) a small amount of water is added to the reaction mixture, concentrated under reduced pressure, and the obtained solid being collected by filtration. The isolated the compound shown by the formula (2-3) can be purified by a technique such as chromatography, recrystallization and the like.
The compound shown by the formula (13) can be produced by making the compound shown by the formula (16) react with a cyanide, an ammonium salt and ammonia.

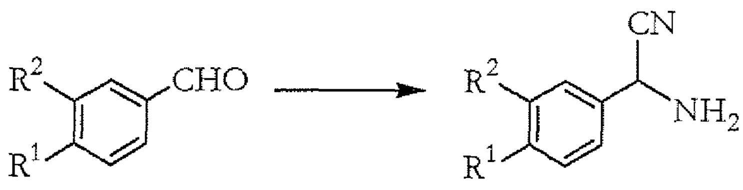

(16) (13)

wherein $R^1$ and $R^2$ have the same meaning defined above.
The reaction is usually carried out in the presence of a solvent.
The solvent used for the reaction includes, for example, alcohols such as methanol, ethanol, 2-propanol and the like, water and the mixture thereof.
The cyanide used for the reaction includes, for example, sodium cyanide and potassium cyanide.
The ammonium salt used for the reaction includes, for example, ammonium chloride and ammonium bromide.
The amount of the reagents used for the reaction is usually 1 to 5 moles of a cyanide, usually 1 to 5 moles of a ammonium salt and usually 1 mole to large excess of ammonia based on 1 mole of the compound of the formula (16).
The reaction temperature is usually in the range of -10 to 100 °C, and the reaction time is usually in the range of 1 to 50 hours.
After completion of the reaction, the compound shown by the formula (13) can be isolated by subjecting to treatment such as organic solvent is added to the reaction mixture, and extracted, then, the organic layer is concentrated. Hydrochloric acid salt of compound shown by formula (13) can be isolated by collecting the crystals which is produced by mixing the compound shown by the formula (13), organic solvent and hydrochloric acid.
The production examples of the compound (I) is further illustrated in detail.

Production Example 1 [production example for the compound (I-1)]

50 g of 3-(4-hydroxy-3-methoxyphenyl)acrylic acid, 0.5 g of 5 % palladium charcoal, about 0.05 g of 36 % hydrochloric acid, 250 ml of ethanol and 100 ml of tetrahydrofuran were mixed and stirred under hydrogen atmosphere. After stopping absorption of hydrogen gas, the reaction mixture was filtered and the filtrate was concentrated under reduced pressure to obtain 52 g of 3-(4-hydroxy-3-methoxyphenyl)propionic acid. 3-(4-hydroxy-3-methoxyphenyl)propionic acid
$^1$H-NMR ($CDCl_3$, TMS) delta (ppm): 6.83(1H, dd, J=7.3Hz, 0.8Hz), 6.70-6.81(2H, m), 3.86(3H, s), 2.88(2H, t, J=7.6Hz), 2.65(2H, t, J=7.6Hz)
50 g of 3-(4-hydroxy-3-methoxyphenyl)propionic acid, 50 ml of propargyl bromide, 88 g of potassium carbonate and 500 ml of acetonitrile were mixed and stirred at 80 °C for 3 hours. Then the reaction mixture was cooled to about room temperature. Ethyl acetate was added to the reaction mixture, and filtered. The filtrate was concentrated under reduced pressure to obtain 67 g of 2-propynyl 3-{3-methoxy-4-(2-propynyloxy)phenyl}propionate. 2-propynyl 3-{3-methoxy-4-(2-propynyloxy)phenyl}propionate $^1$H-NMR ($CDCl_3$, TMS) delta (ppm):6.96(1H, d, J=7.8Hz), 6.68-6.75 (2H, m), 4.73(2H, d, J=2.2Hz), 4.68(2H, d, J=2.2Hz), 3.87(3H, s), 2.93(2H, t, J=7.3Hz), 2.67(2H, t, J=7.3Hz), 2.47-2.50 (2H, m)
67 g of 2-propynyl 3-{3-methoxy-4-(2-propynyloxy)phenyl}propionate 8.08 g of lithium hydroxide, 400 ml of tetrahydrofuran and 200 ml of water were mixed and stirred at 65 °C for 3 hours. Then the reaction mixture was cooled to room temperature. Water was added to the reaction mixture and concentrated under reduced pressure. 5 % hydrochloric acid was added to the residue and extracted with chloroform for three times. The organic layer was dried by magnesium sulfate and concentrated under reduced pressure. The residue was washed with hexane to obtain 51 g of 3-{3-methoxy-4-(2-propynyloxy)phenyl}propionic acid. 3-{3-methoxy-4-(2-propynyloxy)phenyl}propionic acid
$^1$H-NMR ($CDCl_3$, TMS) delta (ppm):6.96(1H, d, J=8.2Hz), 6.73-6.75(2H, m), 4.73(2H, d, J=2.4Hz), 3.85(3H, s), 2.91 (2H, t, J=8Hz), 2.67(2H, t, J=8Hz), 2.49(1H, t, J=2.4Hz)
12.7 g of 3-{3-methoxy-4-(2-propynyloxy)phenyl}}propionic acid, 4.3 ml of thionyl chloride, 100 ml of toluene and about 0.05 g of N,N-dimethylformamide were mixed and stirred at 80 °C for 30 minutes. Then the reaction mixture which was cooled to room temperature was concentrated under reduced pressure to obtain 14.6 g of 3-{3-methoxy-4-(2-propynyloxy)phenyl}propionyl chloride.
3-{3-methoxy-4-(2-propynyloxy)phenyl}propionyl chloride $^1$H-NMR ($CDCl_3$, TMS) delta (ppm):6.97(1H, d ,J=8.8Hz), 6.72-6.74(2H, m), 4.73(2H, d, J=2.4Hz), 3.87(3H, s), 3.19(2H, t, J=7.2Hz), 2.99(2H, t, J=7.2Hz), 2.49(1H, t, J=2.4Hz)
200 mg of 3-{3-methoxy-4-(2-propynyloxy)phenyl}propionyl chloride, 99mg of 4-methylbenzylamine, 0.45 ml of triethylamine and 5 ml of tetrahydrofuran were mixed and stirred at room temperature for 1 hour. Then water was added to reaction mixture and extracted with ethyl acetate. The organic layer was washed successively with 5 % hydrochloric acid, saturated aqueous solution of sodium bicarbonate and saturated aqueous solution of sodium chloride, dried by magnesium sulfate and concentrated under reduced pressure. The residue was purified by silica gel column chromatography to obtain 204 mg of N-(4-methylbenzyl)-3-{3-methoxy-4-(2-propynyloxy)phenyl}pro panamide.
$^1$H-NMR ($CDCl_3$, TMS) delta (ppm): 7.11 (2H, d, J=8.0 Hz), 7.05 (2H, d, J=8.0 Hz), 6.94 (1H, d, J=8.0 Hz), 6.71-6.75 (2H, m), 5.53 (1H, br.s), 4.73 (2H, d, J=2.4 Hz), 4.36 (2H, d, J=5.5 Hz), 3.82 (3H, s), 2.94 (2H, t, J=7.5 Hz), 2.46-2.50 (3H, m), 2.32 (3H, s)

Production Example 2 [production example for the compound (I-2)]

632 mg of 3-{3-methoxy-4-(2-propynyloxy)phenyl}propionyl chloride, 338 mg of 3,4-dimethylbenzylamine, 379 mg of triethylamine and 7 ml of tetrahydrofuran were mixed and stirred at room temperature for 1 hour. Then water was added to the reaction mixture and extracted with ethyl acetate. The organic layer was washed successively with 5 % hydrochloric acid, saturated aqueous solution of sodium bicarbonate and saturated aqueous solution of sodium chloride, dried by magnesium sulfate and concentrated under reduced pressure. The residue was washed with hexane to obtain 830 mg of N-(3,4-dimethylbenzyl)-3-{3-methoxy-4-(2-propynyloxy)phenyl }propanamide.
$^1$H-NMR ($CDCl_3$, TMS) delta (ppm): 7.06 (1H, d, J=7.5Hz), 6.88-7.00 (3H, m), 6.75 (1H, d, J=1.9 Hz), 6.73 (1H, dd, J=8.0 Hz, 1.9 Hz), 5.51 (1H, br.s), 4.73 (2H, d, J=2.4Hz), 4.34 (2H, d, J=5.3 Hz), 3.82 (3H, s), 2.94 (2H, t, J=7.3 Hz), 2.44-2.51 (3H, m), 2.23 (6H, s)

Production Example 3 [production example for the compound (I-3)]

0.40 g of N-(4-methylbenzyl)-3-{3-methoxy-4-(2-propynyloxy)phenyl}pro panamide, 0.53 g of Lawesson' s Reagent and 10 ml of tetrahydrofuran were mixed and stirred at 65 °C for 3 hours. Then the reaction mixture was cooled and concentrated under reduced pressure. Water was added to the reaction mixture and extracted with ethyl

acetate. The organic layer was washed successively with 5 % hydrochloric acid, saturated aqueous solution of sodium bicarbonate and saturated aqueous solution of sodium chloride, dried by magnesium sulfate, and concentrated under reduced pressure. The residue was purified by silica gel column chromatography to obtain 0.38 g of N-(4-methylbenzyl)-3-{3-methoxy-4-(2-propynyloxy)phenyl}pro panthioamide.
$^1$H-NMR ($CDCl_3$ , TMS) delta (ppm) : 7.12 (2H, d, J=7.8 Hz), 6.91-7.02 (3H, m), 6.92 (1H, d, J=8.2 Hz), 6.75 (1H, d, J=1.9 Hz), 6.72 (1H, dd, J=8.2 Hz, 1.9 Hz), 4.72 (2H, d, J=2 Hz), 4.66 (2H, d, J=4.8 Hz), 3.82 (3H, s), 3.08 (2H, t, J=7.2 Hz), 2.97 (2H, t, J=7.2 Hz), 2.48 (1H, t, J=2 Hz), 2.33 (3H, s)

Production Example 4 [production example for the compound (I-4)]

345 mg of N-(3,4-dimethylbenzyl)-3-{3-methoxy-4-(2-propynyloxy)phenyl }propanthioamide was obtained by making 0.43 g of N-(3,4-dimethylbenzyl)-3-{3-methoxy-4-(2-propynyloxy)phenyl }propanamide and 0.36 g of Lawesson's Reagent in a similar manner as Production Example 3.
$^1$H-NMR ($CDCl_3$, TMS) delta (ppm): 7.08 (1H, d, J=7.8 Hz), 7.01 (1H, br.s), 6.84-6.96 (3H, m) , 6.76 (1H, d, J=1.9 Hz), 6.72 (1H, dd, J=8.1 Hz, 1.9 Hz), 4.72 (2H, d, J=2.2 Hz), 4.63 (2H, d, J=4.8 Hz), 3.82 (3H, s), 3.08 (2H, t, J=7.3 Hz), 2.91 (2H, t, J=7.3 Hz), 2.47 (1H, t, J=2.4 Hz), 2.43 (3H, s), 2.23 (3H, s)

Production Example 5 [production example for the compound (I-5)]

0.33 g of 2-amino-2-phenylacetonitrile hydrochloride, 0.88 ml of diisopropylethylamine and 10 ml of tetrahydrofuran were mixed. The mixed solution of 0.50 g of 3-{3-methoxy-4-(2-propynyloxy)phenyl}propionyl chloride and 3 ml of tetrahydrofuran was added to it, then it was stirred at room temperature for 1 hour. After that, the reaction mixture was concentrated under reduced pressure. Water was added to the residue, and extracted with ethyl acetate. The organic layer was successively washed with 5 % hydrochloric acid, water, saturated aqueous solution of sodium bicarbonate and saturated aqueous solution of sodium chloride, dried by magnesium sulfate, and concentrated under reduced pressure. The residue was purified by silica gel column chromatography to obtain 0.39 g of N-(1-phenyl-1-cyanomethyl)-3-{3-methoxy-4-(2-propynyloxy)ph enyl}propanamide.
$^1$H-NMR ($CDCl_3$, TMS) delta (ppm): 7.38-7.41 (3H, m), 7.31-7.34 (2H, m), 6.95 (1H, d, J=8.2 Hz), 6.70-6.73 (2H, m), 6.10 (1H, d, J=8.5 Hz), 5.80 (1H, br.d), 4.73 (2H, d, J=2.4 Hz), 3.83 (3H, s), 2.96 (2H, t, J=7.3 Hz), 2.48-2.62 (3H, m)

Production Example 6 [production example for the compound (I-6)]

2.2 g of 2-amino-2-(4-methylphenyl)acetonitrile hydrochloride was obtained from 5.0 g of 4-methylbenzaldehyde in a similar manner as Production Example 16.
$^1$H-NMR ($CD_3SOCD_3$, TMS) delta (ppm): 9.51 (3H, br.s), 7.54 (2H, d, J=8.2 Hz), 7.35 (2H, d, J=8.2 Hz), 5.90 (1H, s), 2.35 (3H, s)

0.54 g of N-{1-(4-methylphenyl)-1-cyanomethyl}-3-{3-methoxy-4-(2-prop ynyloxy)phenyl}propanamide was obtained by making 0.40 g of 2-amino-2-(4-methylphenyl)acetonitrile hydrochloride react with 0.50 g of 3-{3-methoxy-4-(2-propynyloxy)phenyl}propionyl chloride.
$^1$H-NMR ($CDCl_3$, TMS) delta (ppm): 7.19-7.23 (4H, m), 6.94 (1H, d, J=7.8 Hz), 6.70-6.72 (2H, m), 6.04 (1H, d, J=8.2 Hz), 5.75 (1H, br.d, J=8.2 Hz), 4.73 (2H, d, J=2.2 Hz), 3.83 (3H, s), 2.95 (2H, t, J=7.5 Hz), 2.46-2.60 (3H, m), 2.36 (3H, s)

Production Example 7 [production example for the compound (I-7)]

0.27 g of 2-amino-2-(4-methylphenyl)acetonitrile hydrochloride, 0.30 g of 3-(3-methoxy-4-ethoxyphenyl)propionic acid and 5.8 ml of pyridine were mixed. 244 mg of WSC was added to the mixture and stirred at room temperature for 1.5 hours. Then water was added to the reaction mixture and extracted with ethyl acetate. The organic layer was washed successively with 5 % hydrochloric acid, water and saturated aqueous solution of sodium chloride, dried by magnesium sulfate and concentrated under reduced pressure. The residue was purified by silica gel column chromatography to obtain 0.24 g of N-{1-(4-methylphenyl)-1-cyanomethyl}-3-(3-methoxy-4-ethoxyp henyl)propanamide.
$^1$H-NMR ($CDCl_3$, TMS) delta (ppm): 7.17-7.22 (4H, m), 6.77 (1H, d, J=7.9 Hz), 6.67-6.70 (2H, m), 6.04 (1H, d, J=7.9 Hz), 5.75 (1H, br.d, J=7.9 Hz), 4.06 (2H, q, J=7.1 Hz), 3.83 (3H, s), 2.94 (2H, t, J=7.1 Hz), 2.46-2.59 (2H, m), 2.36 (3H, s), 1.45 (3H, t, J=7.1 Hz)

Production Example 8 [production example for the compound (I-8)]

0.40 g of N-(4-ethylbenzyl)-3-{3-methoxy-4-(2-propynyloxy)phenyl}prop anamide was obtained by making 0.30 g of 3-{3-methoxy-4-(2-propynyloxy)phenyl}propionyl chloride react with 0.16 g of 4-ethylbenzylamine in a similar

manner as Production Example 2.
$^1$H-NMR ($CHCl_3$, TMS) delta (ppm): 7.08-7.15 (4H, m), 6.94 (1H, d, J=8.1 Hz), 6.72-6.75 (2H, m), 5.55 (1H, br.s), 4.73 (2H, d, J=2.2 Hz), 4.37 (2H, d, J=5.6 Hz), 3.82 (3H, s), 2.95 (2H, t, J=7.3 Hz), 2.63 (2H, q, J=7 Hz), 2.47-2.50 (3H, m), 1.22 (3H, t, J=7 Hz)

Production Example 9 [production example for the compound (I-9)]

0.53 g of 4-ethylbenzaldehyde, 0. 55 ml of trimethylsilyl cyanide and 0.03 g of zinc iodide were mixed and stirred at room temperature for 15 minutes, then 1 ml of 10 % methanol solution of ammonia was added to it and stirred at 40 °C for 2 hours. The mixture cooled to room temperature was concentrated under reduced pressure. 0.68 ml of diisopropylethylamine and 10 ml of tetrahydrofuran were added to the obtained residue, and then mixed solution of 0.50 g of 3-{3-methoxy-4-(2-propynyloxy)phenyl}propionyl chloride and 3 ml of tetrahydrofuran was added at 0 to 5 °C and stirred at room temperature for 1 hour. After that, water was added to the reaction mixture and extracted with ethyl acetate. The organic layer was successively washed with 5 % hydrochloric acid, water, saturated aqueous solution of sodium bicarbonate and saturated aqueous solution of sodium chloride, dried by magnesium sulfate, and concentrated under reduced pressure. The residue was purified by silica gel column chromatography to obtain 0.73 g of N-{1-(4-ethylphenyl)-1-cyanomethyl}-3-{3-methoxy-4-(2-propy nyloxy)phenyl}propanamide.
$^1$H-NMR ($CDCl_3$, TMS) delta (ppm): 7.20-7.25 (4H, m), 6.94 (1H, d, J=7.8 Hz), 6.70-6.72 (2H, m), 6.04 (1H, d, J=8.3 Hz), 5.83 (1H, br.d), 4.73 (2H, d, J=2.4 Hz), 3.82 (3H, s), 2.96 (2H, t, J=7.6 Hz), 2.66 (2H, q, J=7.6 Hz), 2.46-2.58 (3H, m) , 1.23 (3H, t, J=7.6 Hz)

Production Example 10 [production example for the compound (I-10)]

200 mg of 3-{3-methoxy-4-(2-propynyloxy)phenyl}propionyl chloride, 112 mg of 4-chlorobenzylamine, 0.17 ml of triethylamine and 5 ml of tetrahydrofuran were mixed and stirred at room temperature for 30 minutes. Then water was added to the reaction mixture and extracted with ethyl acetate. The organic layer was successively washed with 5 % hydrochloric acid, saturated aqueous solution of sodium bicarbonate and saturated aqueous solution of sodium chloride, dried by magnesium sulfate, and concentrated under reduced pressure. The residue was washed with hexane to obtain 212 mg of N-(4-chlorobenzyl)-3-{3-methoxy-4-(2-propynyloxy)phenyl}pro panamide.

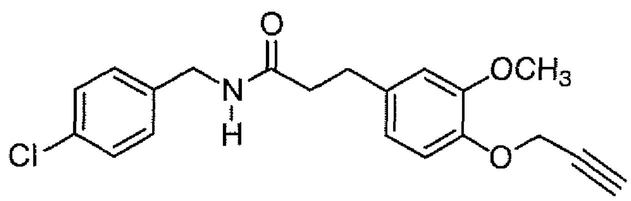

$^1$H-NMR ($CDCl_3$, TMS) delta (ppm): 7.25-7.27 (2H, m), 7.05 (2H, d, J=8.2 Hz), 6.94 (1H, d, J=8.0 Hz), 6.71-6.74 (2H, m), 5.59 (1H, br.s), 4.73 (2H, d, J=2.5 Hz), 4.36 (2H, d, J=5.9 Hz), 3.82 (3H, s), 2.94 (2H, t, J=7.5 Hz), 2.45-2.52 (3H, m)

Production Example 11 [production example for the compound (I-11)]

430 mg of N-(3,4-dichlorobenzyl)-3-{3-methoxy-4-(2-propynyloxy)phenyl }propanamide was obtained by making 300 mg of 3-{3-methoxy-4-(2-propynyloxy)phenyl}propionyl chloride react with 209 mg 3,4-dichlorobenzylamine in a similar manner as Production Example 10.
$^1$H-NMR ($CDCl_3$, TMS) delta (ppm): 7.35 (1H, d, J=8.2 Hz), 7.28 (1H, d, J=1.9 Hz), 6.93-6.99 (2H, m), 6.71-6.74 (2H, m), 5.64 (1H, br.s), 4.73 (2H, d, J=2.4 Hz), 4.34 (2H, d, J=6.1 Hz), 3.83 (3H, s), 2.95 (2H, t, J=7.5 Hz), 2.48-2.54 (3H, m)

Production Example 12 [production example for the compound (I-12)]

0.81 g of 3-{3-ethoxy-4-(2-propynyloxy)phenyl}propionyl chloride, 0.46 g of 4-chlorobenzylamine, 0.64 ml of triethylamine and 10 ml of tetrahydrofuran were mixed and stirred at room temperature for 20 minutes. Then water was added to the reaction mixture and extracted with ethyl acetate. The organic layer was successively washed with 5 % hydrochloric acid, saturated aqueous solution of sodium bicarbonate and saturated aqueous solution of sodium chloride, dried by magnesium sulfate, and concentrated under reduced pressure. The residue was purified by silica gel column chromatography to obtain 0.79 g of N-(4-chlorobenzyl)-3-{3-ethoxy-4-(2-propionyloxy)phenyl}pro panamide.

$^1$H-NMR ($CDCl_3$, TMS) delta (ppm): 7.24-7.26 (2H, m), 7.04-7.06 (2H, m), 6.95 (1H, d, J=8.0 Hz), 6.70-6.74 (2H, m), 5.60 (1H, br.s), 4.74 (2H, d, J=2.4 Hz), 4.35 (2H, d, J=5.8 Hz), 4.02 (2H, q, J=7 Hz), 2.92 (2H, t, J=7.5 Hz), 2.27-2.51 (3H, m), 1.42 (3H, t, J=7 Hz)

Production Example 13 [production example for the compound (I-13)]

0.59 g of N-(4-chlorobenzyl)-3-{3-methoxy-4-(2-propionyloxy)phenyl}pr opanamide, 0.67 g of Lawesson's Reagent and 10 ml of tetrahydrofuran were mixed and stirred at 65 °C for 3 hours. Then the reaction mixture was cooled and concentrated under reduced pressure. Water was added to the residue and then extracted with ethyl acetate. The organic layer was successively washed with 3 % aqueous solution of sodium hydroxide, 5 % hydrochloric acid, saturated aqueous solution of sodium bicarbonate and saturated aqueous solution of sodium chloride, dried by magnesium sulfate, and concentrated under reduced pressure. The residue was purified by silica gel column chromatography to obtain 0.59 g of
N-(4-chlorobenzyl)-3-{3-methoxy-4-(2-propynyloxy)phenyl}pro panthioamide.
$^1$H-NMR ($CDCl_3$, TMS) delta (ppm): 7.26-7.29 (2H, m), 6.99-7.06 (3H, m), 6.92 (1H, d, J=8.0 Hz), 6.70-6.75 (2H, m), 4.73 (2H, d, J=2 Hz), 4.70 (2H, d, J=5.3 Hz), 3.82 (3H, s), 3.09 (2H, t, J=7.2 Hz), 2.97 (2H, t, J=7.2 Hz), 2.49 (1H, t, J=2 Hz)

Production Example 14 [production example for the compound (I-14)]

0.40 g of N-(3,4-dichlorobenzyl)-3-{3-methoxy-4-(2-propionyloxy)pheny 1}propanamide, 0.45 g of Lawesson's Reagent and 15 ml of tetrahydrofuran were mixed and stirred at 65 °C for 3 hours. Then the reaction mixture was cooled. Water was added to the reaction mixture and then extracted with ethyl acetate. The organic layer was successively washed with 5 % hydrochloric acid, saturated aqueous solution of sodium bicarbonate and saturated aqueous solution of sodium chloride, dried by magnesium sulfate, and concentrated under reduced pressure. The residue was purified by silica gel column chromatography to obtain 0.42 g of N-(3,4-dichlorobenzyl)-3-{3-methoxy-4-(2-propynyloxy) phenyl }propanthioamide.
$^1$H-NMR ($CDCl_3$, TMS) delta (ppm): 7.34 (1H, d, J=8.2 Hz), 7.28 (1H, d, J=2.2 Hz), 7.12 (1H, br.s), 6.89-6.99 (2H, m), 6.71-6.75 (2H, m)4.70-4.73 (4H, m) , 3.82 (3H, s), 3.09 (2H, t, J=7.5 Hz), 2.96 (2H, t, J=7.5 Hz), 2.49 (1H, t, J=2.1 Hz)

Production Example 15 [production example for the compound (I-15)]

360 mg of N-(4-chlorobenzyl)-3-{3-ethoxy-4-(2-propynyloxy)phenyl}prop anthioamide was obtained by making 425 mg of N-(4-chlorobenzyl)-3-{3-ethoxy-4-(2-propynyloxy)phenyl}prop anamide react with 330 mg of Lawesson's Reagent in a similar manner as Production Example 13.
$^1$H-NMR ($CDCl_3$, TMS) delta (ppm): 7.41 (1H, br.s), 7.25 (2H, d, J=8.4 Hz), 7.01 (2H, d, J=8.2 Hz), 6.91 (1H, d, J=8.2 Hz), 6.73 (1H, d, J=1.9 Hz), 6.69 (1H, dd, J=8.0 Hz, 1.9 Hz), 4.67-4.71 (4H, m), 3.99 (2H, q, J=7.0 Hz), 3.05 (2H, t, J=7.1 Hz), 2.91 (2H, t, J=7.1 Hz), 2.48 (1H, t, J=2.4 Hz), 1.40 (3H, t, J=6.9 Hz)

Production Example 16 [production example for the compound (I-16)]

22 g of ammonium chloride, 12 g of sodium cyanide and 30 ml of 28 % aqueous ammonia were mixed and 30 g of 4-chlorobenzaldehyde was added slowly at 0 °C. The reaction mixture was stirred at 0 °C for one hour and at room temperature for 8 hours. Then water was added to the reaction mixture and extracted with chloroform. The organic layer was washed with water, dried by magnesium sulfate, and concentrated under reduced pressure. The obtained residue was dissolved to 300 ml of acetonitrile. It was mixed slowly with 25 ml of 36 % hydrochloric acid at 0 °C. The produced solid was collected by filtration, washed with acetonitrile, tert-butylmethylether and hexane, and then dried under reduced pressure to obtain 2-amino-2-(4-chlorophenyl)acetonitrile hydrochloride. $^1$H-NMR ($CD_3SOCD_3$, TMS) delta (ppm): 9.54 (3H, br.s), 7.68-7.72 (2H, m), 7.61-7.64 (2H, m), 5.98 (1H, s)

8.0 g of 2-amino-2-(4-chlorophenyl)acetonitrile hydrochloride, 17 ml of diisopropylethylamine and 150 ml of tetrahydrofuran were mixed, then the mixture of 8.3 g of 3-{3-methoxy-4-(2-propynyloxy)phenyl}propionyl chloride and 30 ml of tetrahydrofuran was added to it, and stirred at room temperature for 1 hour. Then, the reaction mixture was concentrated under reduced pressure. Water was added to the residue and extracted with ethyl acetate. The organic layer was washed successively with 5 % hydrochloric acid, water, saturated aqueous solution of sodium bicarbonate and saturated aqueous solution of sodium chloride, dried by magnesium sulfate, and concentrated under reduced pressure. The residue was purified by silica gel column chromatography to obtain 8.6 g of N-{1-(4-chlorophenyl)-1-cyanomethyl}-3-{3-methoxy-4-(2-prop ynyloxy)phenyl}propanamide.

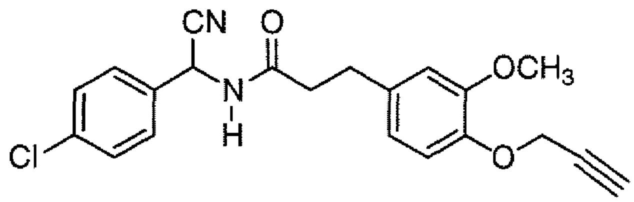

$^1$H-NMR ($CDCl_3$, TMS) delta (ppm): 7.35-7.38 (2H, m), 7.22-7.24 (2H, m), 6.94 (1H, d, J=7.8 Hz), 6.69-6.72 (2H, m), 6.08 (1H, d, J=8.5 Hz), 5.87 (1H, br. d, J=8.5 Hz), 4.73 (2H, d, J=2.4 Hz), 3.82 (3H, s), 2.95 (2H, t, J=7.3 Hz), 2.48-2.63 (3H, m)

Production Example 17 [production example for the compound (I-17)]

300 mg of N-{1-(4-chlorophenyl)-1-cyanomethyl}-3-(3-methoxy-4-ethoxyp henyl)propanamide was obtained by making 406 mg of 2-amino-2-(4-chlorophenyl)acetonitrile hydrochloride react with 448 mg 3-(3-methoxy-4-ethoxyphenyl)propionic acid in a similar manner as Production Example 7. $^1$H-NMR ($CDCl_3$, TMS) delta (ppm): 7.20-7.37 (4H, m), 6.65-6.78 (3H, m), 6.09 (1H, d, J=8.3 Hz), 5.83 (1H, br.d) , 4.06 (2H, q, J=7.0 Hz), 3.83 (3H, s), 2.93 (2H, t, J=7.1 Hz), 2.45-2.64 (2H, m), 1.45 (3H, t, J=7.0 Hz)

Production Example 18 [production example for the compound (I-18)]

200 mg of 3-{3-methoxy-4-(2-propynyloxy)phenyl}propionyl chloride, 176 mg of 4-bromobenzylamine hydrochloride, 0.29 ml of triethylamine and 5 ml of tetrahydrofuran were mixed and stirred at room temperature for 30 minutes. Then water was added to the reaction mixture and extracted with ethyl acetate. The organic layer was successively washed with 5 % hydrochloric acid, saturated aqueous solution of sodium bicarbonate and saturated aqueous solution of sodium chloride, dried by magnesium sulfate, and concentrated under reduced pressure. The residue was washed with hexane to obtain 177 mg of N-(4-bromobenzyl)-3-{methoxy-4-(2-propynyloxy)phenyl}propan amide.
$^1$H-NMR ($CDCl_3$, TMS) delta (ppm): 7.41 (2H, d, J=8 Hz), 7.00 (2H, d, J=8 Hz), 6.94 (1H, d, J=8.0 Hz), 6.71-6.74 (2H, m), 5.59 (1H, br.s), 4.74 (2H, d, J=2.4 Hz), 4.34 (2H, d, J=5.8 Hz), 3.82 (3H, s), 2.94 (2H, t, J=7.5 Hz), 2.49-2.52 (3H, m)

Production Example 19 [production example for the compound (I-19)]

463 mg of N-(4-bromobenzyl)-3-{3-methoxy-4-(2-propynyloxy)phenyl}prop anthioamide was obtained by making 660 mg of N-(4-bromobenzyl)-3-{3-methoxy-4-(2-propynyloxy)phenyl}prop anamide react with 435 mg of Lawesson's Reagent in a similar manner as Production Example 13.
$^1$H-NMR ($CDCl_3$, TMS) delta (ppm): 7.39-7.43 (2H, m), 7.28 (1H, br.s), 6.95 (2H, d, J=8.4 Hz), 6.90 (1H, d, J=8.2 Hz), 6.74 (1H, d, J=1.7 Hz), 6.70 (1H, dd, J=7.9 Hz, 2.0 Hz), 4.71 (2H, d, J=2.4 Hz), 4.68 (2H, d, J=5.3 Hz), 3.79 (3H, s), 3.07 (2H, t, J=7.1 Hz), 2.93 (2H, t, J=7.1 Hz), 2.49 (1H, t, J=2.4 Hz)

Production Example 20 [production example for the compound (I-20)]

1.5 g of 2-amino-2-(4-bromophenyl)acetonitrile hydrochloride was obtained from 5.0 g of 4-bromobenzaldehyde. $^1$H-NMR ($CD_3SOCD_3$, TMS) delta (ppm): 9.49 (3H, br.s), 7.75-7.77 (2H, m), 7.61-7.64 (2H, m), 5.96 (1H, s)
0.67 g of N-{1-(4-bromophenyl)-1-cyanomethyl}-3-{3-methoxy-4-(2-propy nyloxy)phenyl}propanamide was obtained by making 0.73 g of 2-amino-2-(4-bromophenyl)acetonitrile hydrochloride react with 0.50 g of 3-{3-methoxy-4-(2-propynyloxy)phenyl}propionyl chloride in a similar manner as Production Example 5.
$^1$H-NMR ($CDCl_3$, TMS) delta (ppm): 7.50-7.54 (2H, m), 7.15-7.17 (2H, m), 6.94 (1H, d, J=8.0 Hz), 6.69-6.71 (2H, m), 6.07 (1H, d, J=8.2 Hz), 5.92 (1H, br.d), 4.74 (2H, d, J=2.2 Hz), 3.82 (3H, s), 2.95 (2H, t, J=7.2 Hz), 2.47-2.62 (3H, m)

Production Example 21 [production example for the compound (I-21)]

0.34 g of N-{1-(4-bromophenyl)-1-cyanomethyl}-3-(3-methoxy-4-ethoxyph enyl)propanamide was obtained by making 0.36 g of 2-amino-2-(4-bromophenyl)acetonitrilehydrochloride react with 0.30 g of 3-(3-methoxy-4-ethoxyphenyl)propionic acidin a similar manner as Production Example 7.
$^1$H-NMR ($CDCl_3$, TMS) delta (ppm): 7.51 (2H, d, J=8.7 Hz), 7.15 (2H, d, J=8.7 Hz), 6.75 (1H, d, J=7.9 Hz), 6.66-6.70

(2H, m), 6.07 (1H, d, J=8.3 Hz), 5.79 (1H, br.d J=8.3 Hz), 4.06 (2H, q, J=7.1 Hz), 3.83 (3H, s), 2.94 (2H, t, J=7.1 Hz), 2.47-2.63 (2H, m), 1.46 (3H, t, J=7.1 Hz)

Production Example 22 [production example for the compound (I-22)]

The mixture of 31 g of aluminum chloride and 150 ml of dichloromethane was cooled with ice, and 30 g of ethyl oxalyl chloride was mixed to it, and stirred under ice-cooling for 30 minutes. The obtained mixture was added slowly to the mixture of 22 g of indan and 200 ml of methylene chloride under ice-cooling, and then stirred at room temperature for 1 hour. The reaction mixture was mixed slowly to ice water, and organic layer was separated. The organic layer was washed with water, dried by magnesium sulfate, and concentrated under reduced pressure to obtain 37 g of crude product of ethyl indan-5-yl-oxoacetate. $^1$H-NMR ($CDCl_3$ , TMS) delta (ppm): 7.84 (1H, s) , 7.78 (1H, d, J=7.8 Hz), 7.34 (1H, d, J=7.8 Hz), 4.44 (2H, q, J=7.1 Hz), 2.95-2.99 (4H, m), 2.09-2.17 (2H, m), 1.42 (3H, t, J=7.1 Hz)

The mixture of 25 g of crude product of ethyl indan-5-yl-oxoacetate, 7.0 g of sodium borohydride and 250 ml of ethanol was stirred at room temperature for 1 hour and then at 60 °C for 2 hours. Water was added to the reaction mixture, and organic solvent was distilled off under reduced pressure. The residue was adjusted to PH=2 with 36 % hydrochloric acid, and then extracted with chloroform. The organic layer was washed with water, dried magnesium sulfate, and then organic solvent was distilled off under reduced pressure. The residue was washed with hexane to obtain 11 g of indan-1-ylethan-1,2-diol. $^1$H-NMR ($CDCl_3$ , TMS) delta (ppm): 7.22 (1H, s), 7.20 (1H, d, J=7.7 Hz), 7.11 (1H, d, J=7.7 Hz), 4.78 (1H, dd, J=8.2 Hz, 3.6 Hz), 3.62-3.75 (2H, m), 2.87-2.91 (4H, m), 2.5 (1H, br.s), 2.3 (1H, br.s), 2.03-2.10 (2H, m)

The mixture of 11 g of crude product of indan-1-ylethan-1,2-diol, 18 g of periodic acid, 100 ml of water and 100 ml of ethanol was stirred at room temperature for 12 hours. Water was added to the reaction mixture, and extracted with ethyl acetate. The organic layer was washed with water twice, and then organic solvent was distilled off under reduced pressure. The residue was purified by silica gel column chromatography to obtain 8.1 g of indan-5-carbaldehyde.

$^1$H-NMR ($CDCl_3$, TMS) delta (ppm): 9.95 (1H, s), 7.73 (1H, s), 7.65 (1H, dd, J=7.7 Hz, 1.2 Hz), 7.36 (1H, d, J=7.7 Hz), 2.97 (4H, t, J=7.5 Hz), 2.08-2.17 (2H, m)

The mixture of 8.1 g of indan-5-carbardehyde, 4.3 g of hydroxylamine hydrochloride, 5.0 g of sodium acetate, 25 ml of water and 100 ml of ethanol was stirred at room temperature for 1 hour. Water was added to the reaction mixture, extracted with tert-butylmethylether. The organic layer was washed successively with water and saturated aqueous solution of sodium chloride, and then organic solvent was distilled off under reduced pressure. The residue was washed with hexane to obtain 6.3 g of indan-5-carbaldehydeoxime.

$^1$H-NMR ($CDCl_3$, TMS) delta (ppm): 8.11 (1H, s), 7.45 (1H, s), 7.30-7.35 (2H, m), 7.22 (1H, d, J=7.7 Hz). 2.91 (4H, t, J=7.5 Hz), 2.05-2.13 (2H, m)

The mixture of 3.0 g of indan-5-carbaldehydeoxime, 0.8 g of 10 % palladium charcoal, about 3.8 ml of 36 % hydrochloric acid and 90 ml of ethanol was stirred under hydrogen atmosphere. After stopping absorption of hydrogen gas, the reaction mixture was filtered. The filtrate was concentrated under reduced pressure to obtain 3.2 g of (indan-5-yl)methylamine hydrochloride.

$^1$H-NMR ($CD_3$ $SOCD_3$, TMS) delta (ppm): 8.37 (3H, br.s), 7.34 (1H, s), 7.21-7.34 (2H, m), 3.94 (2H, s), 2.85 (4H, t, J=7.5 Hz), 1.98-2.05 (2H, m)

0.50 g of 3-{3-methoxy-4-(2-propynyloxy)phenyl}propionyl chloride, 0.36 g of (indan-5-yl)methylamine hydrochloride, 0.8 ml of triethylamine and 20 ml of tetrahydrofuran were mixed and stirred at room temperature for 20 minutes. Water was added to the reaction mixture, and extracted with ethyl acetate. Then the organic layer was washed with successively with 5 % hydrochloric acid, saturated aqueous solution of sodium bicarbonate and saturated aqueous solution of sodium chloride, dried with magnesium sulfate, and concentrated under reduced pressure. The residue was washed with hexane to obtain 0.34 g of N-{(indan-5-yl)methyl}-3-{3-methoxy-4-(2-propynyloxy)phenyl }propanamide.

$^1$H-NMR ($CDCl_3$, TMS) delta (ppm): 6.71-7.16 (6H, m), 5.54 (1H, br.s), 4.72 (2H, m), 4.36 (2H, d, J=4.6Hz), 3.82 (3H, s), 2.65-2.94 (6H, m), 2.48 (3H, m), 2.04-2.08 (2H, m)

Production Example 23 [production example for the compound (I-23)]

350 mg of N-(indan-5-ylmethyl)-3-{3-methoxy-4-(2-propynyloxy)phenyl}p ropanthioamide was obtained by making 500 mg of N-(indan-5-ylmethyl)-3-{3-methoxy-4-(2-propynyloxy)phenyl}p ropanamide react with 627 mg of Lawesson's Reagent.

$^1$H-NMR ($CDCl_3$, TMS) delta (ppm) : 7.16 (1H, d, J=7.7 Hz), 6.86-7.10 (4H, m), 6.75 (1H, d, J=1.9 Hz), 6.72 (1H, dd, J=8.2 Hz, 1.9 Hz), 4.72 (2H, d, J=2.4 Hz), 4.65 (2H, d, J=4.8 Hz), 3.81 (3H, s), 3.08 (2H, t, J=7.4 Hz), 2.84-2.95 (6H, m), 2.47 (1H, t, J=2.4 Hz), 2.01-2.11 (2H, m)

Production Example 24 [production example for the compound (I-24)]

250 mg of N-{1-(indan-5-yl)-1-cyanomethyl}-3-{3-methoxy-4-(2-propynyl oxy)phenyl}propanamide was obtained by making 731 mg of indan-5-carbaldehyde react with 0.7 g of 3-{3-methoxy-4-(2-propynyloxy)phenyl}propionic acid in a similar manner as Production Example 9.
$^1$H-NMR ($CDCl_3$, TMS) delta (ppm): 9.95 (1H, s), 7.73 (1H, s), 7.65 (1H, dd, J=7.7 Hz, 1.2 Hz), 7.36 (1H, d, J=7.7 Hz), 2.97 (4H, t, J=7.5 Hz), 2.08-2.17 (2H, m)

Production Example 25 [production example for the compound (I-25)]

55 g of crude product of ethyl 5,6,7,8-tetrahydronaphthlene-2-yloxoacetatewas obtained from 58 g of 1,2,3,4-tetrahydronaphthalene in a similar manner as Production Example 22.
$^1$H-NMR ($CDCl_3$, TMS) delta (ppm): 7.20-7.25 (2H, m), 7.05-7.10 (1H, m), 6.94 (1H, d, J=7.9 Hz), 6.68-6.74 (2H, m), 6.01 (1H, d, J=8.2 Hz), 5.74 (1H, d, J=7.4 Hz), 4.72 (2H, d, J=2.4 Hz), 3.82 (3H, s), 2.85-2.98 (6H, m), 2.45-2.60 (3H, m), 2.03-2.14 (2H, m)
17 g of 5,6,7,8-tetrahydronaphthlene-2-ylethane-1,2-diol was obtained from 30 g of crude product of ethyl 5,6,7,8-tetrahydronaphthlene-2-yloxoacetate.
$^1$H-NMR ($CDCl_3$, TMS) delta (ppm): 7.69-7.72 (2H, m), 7.17 (1H, d, J=7.8 Hz), 4.44 (2H, q, J=7.2 Hz), 2.75-2.83 (4H, m) , 1.17-1.85 (4H, m), 1.42 (3H, t, J=7.2 Hz)
13 g of 5,6,7,8-tetrahydronaphthlene-2-carbaldehyde was obtained from 16 g of 5,6,7,8-tetrahydronaphthlene-2-ylethane-1,2-diol.
$^1$H-NMR ($CDCl_3$, TMS) delta (ppm): 7.01-7.04 (3H, m), 4.76 (1H, dd, J=8.1 Hz, 3.7), 3.63-3.77 (2H, m), 2.75-2.76 (4H, m), 2.4 (1H, br.s), 2.0 (1H, br.s), 1.17-1.18 (4H, m)
1.5 g of 5,6,7,8-tetrahydronaphthlene-2-carbaldehydeoxime was obtained from 2.6 g of 5,6,7,8-tetrahydronaphthlene-2-carbaldehyde.
$^1$H-NMR ($CDCl_3$, TMS) delta (ppm): 8.08 (1H, s), 7.33 (1H, s), 7.26-7.31 (2H, m), 7.07 (1H, d, J=7.6 Hz), 2.75-2.79 (4H, m), 1.78-1.82 (4H, m)
1.5 g of 5,6,7,8-tetrahydronaphthlene-2-yl-methylamine hydrochloride was obtained from 2.6 g of 5,6,7,8-tetrahydronaphthlene-2-carbaldehydeoxime.
$^1$H-NMR ($CD_3SOCD_3$, TMS) delta (ppm): 8.43 (3H, br.s), 7.17-7.19 (2H, m), 7.06-7.07 (1H, m), 3.89 (12H, d, J=5.1 Hz), 2.70 (4H, s), 1.72-1.73 (4H, m)
0.41 g of N-{(5,6,7,8-tetrahydronaphthalene-2-yl)methyl}-3-{3-methoxy -4-(2-propynyloxy)phenyl}propanamide was obtained by making 0.30 g of 3-{3-methoxy-4-(2-propynyloxy)phenyl}propionyl chloride react with 0.23 g of (5,6,7,8-tetrahydronaphethalene-2-yl)methylamine hydrochloride and 0.42 ml of triethylamine.
$^1$H-NMR ($CDCl_3$, TMS) delta (ppm): 6.89-7.02 (4H, m), 6.71-6.76 (2H, m), 5.52 (1H, br.s), 4.73 (2H, d, J=2.5 Hz), 4.33 (2H, d, J=5.4 Hz), 3.83 (3H, s), 2.92 (2H, t, J=7.8 Hz), 2.49-2.72 (4H, m), 2.45-2.49 (3H, m), 1.76-1.79 (4H, m)

Production Example 26 [production example for the compound (I-26)]

637 mg of N-(5,6,7,8-tetrahydronaphthalene-2-ylmethyl)-3-{methoxy-4-( 2-propynyloxy)phenyl}propanamide, 769 mg of Lawesson's Reagent and 10 ml of tetrahydrofuran were mixed, and stirred at 65 °C for 3 hours. Then the reaction mixture was cooled and concentrated under reduced pressure. Water was added to the residue and extracted with ethyl acetate. The organic layer was washed successively with 5 % hydrochloric acid, saturated aqueous solution of sodium bicarbonate and saturated aqueous solution of sodium chloride, dried by magnesium sulfate and concentrated under reduced pressure. The residue was purified by silica gel column chromatography to obtain 394 mg of N-(5,6,7,8-tetrahydronaphthalene-2-ylmethyl)-3-{3-methoxy-4 -(2-propynyloxy)phenyl}propanthioamide.
$^1$H-NMR ($CDCl_3$, TMS) delta (ppm): 6.91-7.03 (3H, m), 6.85 (2H, d, J=7.5 Hz), 6.76 (1H, d, J=2.0 Hz), 6.72 (1H, dd, J=8.1 Hz, 2.0 Hz), 4.72 (2H, d, J=2.2 Hz), 4.62 (2H, d, J=4.6 Hz), 3.82 (3H, s), 3.08 (2H, t, J=7.3 Hz), 2.91 (2H, t, J=7.3 Hz), 2.69-2.77 (4H, m), 2.48 (1H, t, J=2.4 Hz), 1.75-1.81 (4H, m)

Production Example 27 [production example for the compound (I-27)]

0.27 g of N-{1-(5,6,7,8-tetrahydronaphthalene-2-yl)-1-cyanomethyl}-3-{3-methoxy-4-(2-propyonyloxy)phenyl}propanamide was obtained by making 0.65 g of 5,6,7,8-tetrahydronaphthalene-2-carbaldehyde react with 0.50 g of 3-{3-methoxy-4-(2-propyonyloxy)phenyl}propionyl chloride in a similar manner as Production Example 9.
$^1$H-NMR ($CDCl_3$, TMS) delta (ppm): 7.07-7.09 (2H, m), 7.02 (1H, dd, J=8.0 Hz, 2.2 Hz), 6.95 (1H, d, J=7.8 Hz), 6.70-6.72 (2H, m) , 5.89 (1H, d, J=8.3 Hz), 5.76 (1H, br.d, J=8.2 Hz), 4.73 (2H, d, J=2.4 Hz), 3.83 (3H, s), 2.94 (2H, t, J=7.5 Hz), 2.50-2.80 (4H, m), 2.49-2.58 (2H, m), 2.48 (1H, t, J=2.5 Hz), 1.77-1.80 (4H, m)

Production Example 28 [production example for the compound (I-28)]

7.58 g of lithium aluminium hydride and 100 ml of tetrahydrofuran were mixed. Tetrahydrofuran solution of 15.3 g of 2-naphthonitrile was dropped slowly to it, and then the mixture was stirred at room temperature for 3 hours. After that the reaction mixture was cooled to 0 to 5 °C. Then aqueous solution of caustic soda was dropped slowly to the reaction mixture. After dropping the reaction mixture was filtered, and the filtrate was concentrated under reduced pressure. Ethyl acetate and water were added to the residue and separated to two layer. The organic layer was dried by magnesium sulfate and concentrated under reduced pressure. The residue was washed with hexane to obtain 12.5 g of 2-(aminomethyl)naphthalene.
$^1$H-NMR ($CDCl_3$, TMS) delta (ppm): 7.80-7.83 (3H, m), 7.74 (1H, s), 7.41-7.49 (3H, m), 4.03 (2H, s), 1.62 (2H, br.s)
0.25 g of N-{(naphthalene-2-yl)methyl}-3-{3-methoxy-4-(2-propynyloxy) phenyl}propanamide was obtained by making 0.30 g of 3-{3-methoxy-4-(2-propyonyloxy)phenyl}propionyl chloride react with 0.19 g of 2-(aminomethyl) naphthalene and 0.5 ml of triethylamine.
$^1$H-NMR ($CDCl_3$, TMS) delta (ppm): 7.76-7.82 (3H, m), 7.60 (1H, s), 7.44-7.49 (2H, m), 7.29-7.29 (1H, m), 6.89-6.90 (1H, m), 6.71-6.95 (2H, m), 5.74 (1H, br.s), 4.69 (2H, d, J=2.2 Hz), 4.55 (2H, d, J=5.9 Hz), 3.78 (3H, s), 2.96 (2H, t, J=7.6 Hz), 2.46-2.54 (3H, m)

Production Example 29 [production example for the compound (I-29)]

0.38 g of N-{(naphthalene-2-yl)methyl}-3-{3-methoxy-4-(2-propynyloxy) phenyl}propanthioamide was obtained by making 0.61 g of N-{(naphthalene-2-yl)methyl}-3-{3-methoxy-4-(2-propynyloxy) phenyl}propanamide react with 745 mg of Lawesson's Reagent in a similar manner as Production Example 26.
$^1$H-NMR ($CDCl_3$, TMS) delta (ppm): 8.7-8.9 (3H, m), 7.60 (1H, s), 7.4-7.6 (2H, m), 7.20 (1H, dd, J=8.5 Hz, 1.7 Hz), 7.15 (1H, br), 6.88 (1H, d, J=8.0 Hz), 6.77 (1H, d, J=1.9 Hz), 6.72 (1H, dd, J=8.2 Hz, 1.8 Hz), 4.88 (2H, d, J=5.1 Hz), 4.67 (2H, d, J=2.4 Hz), 3.80 (3H, s), 3.10 (2H, t, J=7.2 Hz), 2.96 (2H, t, J=7.2 Hz), 2.44 (1H, t, J=2.4 Hz)
Next, it is explained about the compound (II). In the present invention composition, dimethomorph (common name) means 4-[3-(4-chlorophenyl)-3-(3,4-dimethoxyphenyl)acryloyl]morph oline. Dimethomorph is described in "The Pesticide Manual, Thirteenth Edition (edited by Clive Tomlin, published by The British Crop Protection Council and The Royal Society of Chemistry, 2003) p.325"
The present invention composition has an excellent controlling activity against plant diseases due to Phycomycetes (Oomycetes) such as *Plasmopara viticola* of grapes, *Pseudoperonospora cubensis* of cucumber, *Phytophthora infestans* of tomato, *Peronospora pisi* of string bean, *Peronospora viciae* of broad bean, *Phytophthora nicotianae ver. nicotianae, Phytophthora infestans* of potato, *Phytophthora nicotianae ver. parasitica* of strawberry, *Phytophthora nicotianae ver. nicotianae* of tabaco, *Phytophthora megasperma* of rose, and *Pythium sp.*.
The mixing ratios of the compound (I) and the compound (II) in the present invention compositions are not strictly limited, but the mixing ratios are usually in the range of 0.1 to 50 parts by weight, preferably 0.2 to 10 parts by weight, of the compound (II) for 1 part by weight of the compound (I). Namely, in the present invention composition, the mixing ratio of the compound (I) to the compound (II) is usually 10:1 to 1:50, preferably 5:1 to 1:10 by weight.
The present invention composition may be a mixture of the compound (I) and the compound (II) as it is, but usually further comprises a solid carrier, liquid carrier and/or gaseous carrier, optionally surfactant, sticking agent, dispersing agent, stabilizing agent and the like to be formulated to wettable powder, suspension concentrate, granule, dry flowable, emulsifiable concentrate, soluble concentrate, oil solution, fogging, aerosol, microcapsule and the like.
The present invention composition may be prepared by mixing a formulation of the compound (I) with a formulation of the compound (II). Further, the compound (I) and the compound (II) can be mixed at the time of application.
In such a formulation, the active ingredient compounds are usually included at the total amount of 0.1 to 99 % by weight, preferably 0.2 to 90 % by weight.
The solid carrier includes, for example, a fine power or a granule of clays (kaolin clay, diatomite, attapulgite clay, bentonite, acid clay, etc.), talc, other inorganic minerals (sericite, quartz powder, sulfur powder, activated carbon, calcium carbonate, hydrated silica, etc.) or chemical fertilizers (ammonium sulfate, ammonium phosphate, ammonium nitrate, urea, ammonium chloride, etc.). The liquid carrier includes, for example, water, alcohols (methanol, ethanol, etc.), ketones (acetone, methyl ethyl ketone, cyclohexanone, etc.), aromatic hydrocarbons (benzene, toluene, xylene, ethylbenzen, methylnaphthalene, etc.), aliphatic hydrocarbons (hexane, kerosine, etc.), esters (ethyl acetate, butyl acetate, etc.), nitriles (acetonitrile, isobutyronitrile, etc.), ethers (dioxane, diisopropyl ether, etc.), acid amides (dimethylformamide, dimethylacetamide, etc.), halogenated hydrocarbons (dichloroethane, trichloroethylene, carbontetrachloride, etc.). The gaseous carrier includes, for example, butane gas, carbon dioxide, fluorocarbons. The surfactant includes, for example, alkyl sulfates, alkylsulfonic acid salts, alkylarylsulfonic acid salts, alkyl aryl ethers and their polyoxyethylene derivatives, polyethylene glycol ethers, polyhydric alcohol esters, and sugar alcohol derivatives. The ticking agents and dispersing agents include casein, gelatin, polysaccharides (starch, gum arabic, cellulose derivatives,

alginic acid, etc.), lignin derivatives, bentonite, sugurs, synthetic water-soluble polymers (polyvinyl alcohol, polyvinylpyrrolidone, polyacrylic acid, etc. ); the stabilizing agents include PAP (isopropyl acid phosphate), BHT (2,6-di-t-butyl-4-methylphenol), BHA (a mixture of 2-t-butyl-4-methoxyphenol and 3-t-butyl-4-methoxyphenol), vegetable oils, mineral oils, fatty acids, and fatty acid esters.

The formulations of the present invention composition are applied to plant(s) or soil where plant(s) are growing, as it is or after diluted with water. When the formulation is applied to soil where plant(s) are growing, the formulation or its water thinner may be used, for example, by applying to the surface of the soil or mixing with the soil.

When the present invention composition is applied to plant(s) or soil where plant(s) are growing, the application amount thereof, which may be varied with a kind of active ingredient compounds, mixing ratio, weather conditions, formulation types, application timings, method of application, place of application, a kind of control-object diseases, a kind of control-object plant(s), a kind of plant and the like, is usually 0.001 to 1000 g of the total amount of active ingredient compounds per 100 $m^2$, preferably 0.1 to 100 g.

Emulsifiable concentrate, wettable powder, flowable and the like are usually sprayed after diluted with water. In this case, the concentration of the active ingredient compounds is usually in the range of from 0.0001 to 1 % by weight, preferably from 0.001 to 0.5 % by weight. Dust, granule and the like are usually directly used.

The present invention composition can be also applied in treatment methods such as seed disinfection, ULV and the like. The methods of seed disinfection include, for example, a method to coat seeds of a plant with the present invention composition, a method to soak seeds of a plant in the present invention composition and a method to spray seeds of a plant with the present invention composition. In this case, the application amount thereof is usually 0.001 to 50 g of the total amount of active ingredient compounds per 1 kg of seeds of a plant, preferably 0.01 to 10 g.

The present invention composition may be used together with other fungicides, insecticides, acaricides, nematicides, herbicides, fertilizers, soil conditioners and the like.

## EXAMPLES

The present invention is further illustrated in detail with formulation examples and test examples, but should not be constructed to be limited as follows. Parts represent parts by weight.

First, formulation examples are illustrated.

### Formulation Example 1

1 part of each of the compound (I) selected from compound (I-I) to (1-29); 1 part of dimethomorph; 1 part of synthetic hydrated silica; 2 parts of calcium ligninsulfonate, 30 parts of bentonite and 65 parts of kaolin clay are pulverized and mixed well, and water is added thereto and kneeded, granulated and dried to give a granule.

### Formulation Example 2

5 parts of each of the compound (I) selected from compound (I-I) to (I-29); 5 parts of dimethomorph; 1 part of synthetic hydrated silica; 2 parts of calcium ligninsulfonate, 30 parts of bentonite and 57 parts of kaolin clay are pulverized and mixed well, and water is added thereto and kneeded, granulated and dried to give a granule.

### Formulation Example 3

0.5 parts of each of the compound (I) selected from compound (I-I) to (1-29); 0.5 parts of dimethomorph; 88 parts of kaolin clay and 11 parts of talc are pulverized and mixed well to give a dust.

### Formulation Example 4

5 parts of each of the compound (I) selected from compound (I-I) to (1-29); 5 parts of dimethomorph; 3 parts of polyoxyethylene sorbitan monooleate; 3 parts of carboxymethylcellulose and 84 parts of water are mixed and wet pulverized until particle size become 5 micron or less to give a suspension concentrate.

### Formulation Example 5

10 parts of each of the compound (I) selected from compound (I-I) to (1-29); 10 parts of dimethomorph; 3 parts of calcium ligninsulfonate; 2 parts of magnesium laurylsulfate and 75 parts of synthetic hydrated silica are pulverized and mixed well to give a wettable powder.

Next, it is shown that the present invention compositions have an excellent controlling activity against plant

diseases as test example. Generally, an expected controlling value, when two active ingredient compounds are mixed and applied, can be calculated by the Colby's formula described below.

$$E=X+Y-(X \times Y)/100$$

X : protective value (%) when treatment is carried out by using an active ingredient compound A at the concentration of m ppm. Y : protective value (%) when treatment is carried out by using an active ingredient compound B at the concentration of n ppm E :protective value (%) when treatment is carried out by using the active ingredient compound A at the concentration of m ppm and the active ingredient compound B at the concentration of n ppm (hereinafter referred to as "expected protective value") And, generally speaking, if actual protective value (%) when treatment is carried out by actually mixing two kinds of active ingredient compounds is not less than the expected protective value (%), it can be said that there is a mixing effect.

Test Example 1

Sandy loam soil was compacted in a plastic pot, and a grape (variety: Berry A) was seeded and grown in a green house for 40 days. The test drug formulated to wettable powder according to Formulation Example 5, then, diluted with water to provide prescribed concentration, and these diluted solutions were sprayed onto stems and leaves so as to give sufficient adhesion on the surface of grape leaves. After that, a suspension of zoosporangia of Plasmopara viticola was inoculated by spraying to stems and leaves of the grape seedling. After inoculation, the grape seedling was first grown for one night at 23 °C under humid, then further grown for 7 days in the green house. Then, the ratio of diseased area (%) of Plasmopara viticola on stems and leaves of the grape seedling was investigated and the actual. protective value was obtained according to the formula described below form the investigated result.

protective value (%) ={[the ratio of diseased area of non treated

plant (%) - the ratio of diseased area of treated plant (%)]/[the ratio of diseased area of non treated plant (%)]}×100

The result is shown in Table 2 and Table 3.

Table 2

| Test compound | Concentration of active ingredient (ppm) | Actual protective value (%) | Expected protective value (%) |
|---|---|---|---|
| (I-1)+dimethomorph | 50+50 | 100 | 100 |
| (I-2)+dimethomorph | 50+50 | 100 | 100 |
| (I-3)+dimethomorph | 50+50 | 100 | 100 |
| (I-4)+dimethomorph | 50+50 | 100 | 100 |
| (I-5)+dimethomorph | 50+50 | 100 | 100 |
| (I-6)+dimethomorph | 50+50 | 100 | 100 |
| (I-7)+dimethomorph | 50+50 | 100 | 100 |
| (I-8)+dimethomorph | 50+50 | 100 | 100 |
| (I-9)+dimethomorph | 50+50 | 100 | 100 |
| (I-10)+dimethomorph | 50+50 | 100 | 100 |
| (I-11)+dimethomorph | 50+50 | 100 | 100 |
| (I-12)+dimethomorph | 50+50 | 100 | 100 |
| (I-13)+dimethomorph | 50+50 | 100 | 100 |
| (I-14)+dimethomorph | 50+50 | 100 | 100 |
| (I-15)+dimethomorph | 50+50 | 100 | 100 |
| (I-16)+dimethomorph | 50+50 | 100 | 100 |
| (I-17)+dimethomorph | 50+50 | 100 | 100 |
| (I-18)+dimethomorph | 50+50 | 100 | 100 |
| (I-19)+dimethomorph | 50+50 | 100 | 100 |
| (I-20)+dimethomorph | 50+50 | 100 | 100 |

Table 2 (continued)

| Test compound | Concentration of active ingredient (ppm) | Actual protective value (%) | Expected protective value (%) |
|---|---|---|---|
| (I-21)+dimethomorph | 50+50 | 100 | 100 |
| (I-22)+dimethomorph | 50+50 | 100 | 100 |
| (I-23)+dimethomorph | 50+50 | 100 | 100 |
| (I-24)+dimethomorph | 50+50 | 100 | 100 |
| (I-25)+dimethomorph | 50+50 | 100 | 100 |
| (I-26)+dimethomorph | 50+50 | 100 | 100 |
| (I-27)+dimethomorph | 50+50 | 100 | 100 |
| (I-28)+dimethomorph | 50+50 | 100 | 100 |
| (I-29)+dimethomorph | 50+50 | 100 | 100 |

Table 3

| Test compound | Concentration of active ingredient (ppm) | Actual protective value (%) | Expected protective value (%) |
|---|---|---|---|
| (I-1) | 50 | 100 | - |
| (I-2) | 50 | 100 | - |
| (I-3) | 50 | 100 | - |
| (I-4) | 50 | 100 | - |
| (I-5) | 50 | 100 | - |
| (I-6) | 50 | 100 | - |
| (1-7) | 50 | 100 | - |
| (1-8) | 50 | 100 | - |
| (1-9) | 50 | 100 | - |
| (I-10) | 50 | 100 | - |
| (I-11) | 50 | 100 | - |
| (1-12) | 50 | 100 | - |
| (1-13) | 50 | 100 | - |
| (1-14) | 50 | 100 | - |
| (I-15) | 50 | 100 | - |
| (I-16) | 50 | 100 | - |
| (1-17) | 50 | 100 | - |
| (I-18) | 50 | 100 | - |
| (I-19) | 50 | 100 | - |
| (1-20) | 50 | 100 | - |
| (I-21) | 50 | 100 | - |
| (1-22) | 50 | 100 | - |
| (I-23) | 50 | 100 | - |
| (I-24) | 50 | 100 | - |
| (I-25) | 50 | 100 | - |
| (I-26) | 50 | 100 | - |
| (I-27) | 50 | 100 | - |
| (I-28) | 50 | 100 | - |
| (I-29) | 50 | 100 | - |
| dimethomorph | 50 | 100 | - |

INDUSTRIAL APPLICABILITY

The present invention composition has an excellent controlling activity against plant diseases, especially has an excellent controlling activity against plant diseases due to Phycomycetes (Oomycetes).

## Claims

**1.** A fungicidal composition comprising:

(I) an amide compound represented by formula (1)

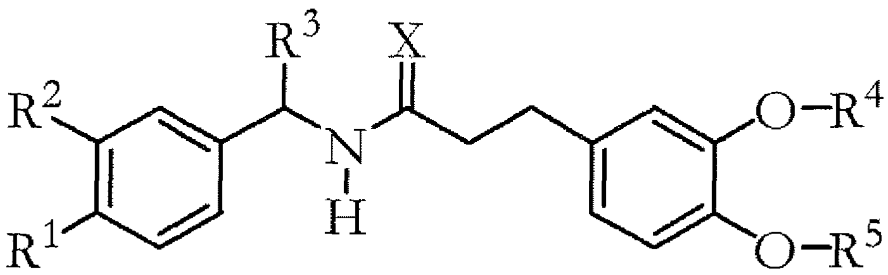

( 1 )

wherein,
X represents an oxygen atom or a sulfur atom,
$R^1$ represents a hydrogen atom, a halogen atom, a C1-C4 alkyl group, a C1-C4 haloalkyl group, a C2-C4 alkenyl group, a C2-C4 alkynyl group, a C1-C4 alkoxy group, a C1-C4 haloalkoxy group or a cyano group,
$R^2$ represents a hydrogen atom, a halogen atom, a C1-C4 alkyl group, a C1-C4 haloalkyl group, a C2-C4 alkenyl group or a C2-C4 alkynyl group,
or both of $R^1$ and $R^2$ are combined together to represent a C3-C5 polymethylene group or 1,3-butadiene-1,4-diyl group,
$R^3$ represents a hydrogen atom, a C1-C3 alkyl group or a cyano group,
$R^4$ represents a C1-C3 alkyl group,
$R^5$ represents a C1-C4 alkyl group, a C3-C4 alkenyl group or a C3-C4 alkynyl group;
and
(II) dimethomorph;
as active ingredients.

**2.** The fungicidal composition according to claim 1, wherein the mixing ratio of the amide compound represented by formula (1) and dimethomorph is 0.1 to 50 parts by weight of dimethomorph for 1 part by weight of the amide compound represented by formula (1).

**3.** The fungicidal composition according to claim 1 or claim 2, wherein
X is an oxygen atom or sulfur atom,
$R^1$ is a halogen atom or a C1-C2 alkyl group,
$R^2$ is a hydrogen atom, a halogen atom or a C1-C2 alkyl group; or both of $R^1$ and $R^2$ are combined together to be a C3-C4 polymethylene group or 1,3-butadiene-1,4-diyl group,
$R^3$ is a hydrogen atom,
$R^4$ is a C1-C2 alkyl group,
$R^5$ is a C3 alkynyl group
in the formula (1).

**4.** The fungicidal composition according to claim 1 or claim 2, wherein
X is an oxygen atom,
$R^1$ is a halogen atom, a halogen atom or a C1-C2 alkyl group, $R^2$ is a hydrogen atom or a halogen atom;
or both of $R^1$ and $R^2$ are combined together to be a C3-C4 polymethylene group or 1,3-butadiene-1,4-diyl group,
$R^3$ is a cyano group,
$R^4$ is a C1-C2 alkyl group,
$R^5$ is a C1-C2 alkyl group, a C3 alkenyl group or a C3 alkynyl group,
in the formula (1)

**5.** The fungicidal composition according to claim 1 or claim 2, wherein the amide compound represented by formula (1) is N-(4-chlorobenzyl)-3-{3-methoxy-4-(2-propynyloxy)phenyl}pro panamide.

6. The fungicidal composition according to claim 1 or claim 2, wherein the amide compound represented by formula (1) is N-{1-(4-chlorophenyl)-1-cyanomethyl}-3-{3-methoxy-4-(2-prop ynyloxy)phenyl}propanamide.

7. A plant diseases controlling method which comprises applying effective amount of:

(I) an amide compound represented by formula (1)

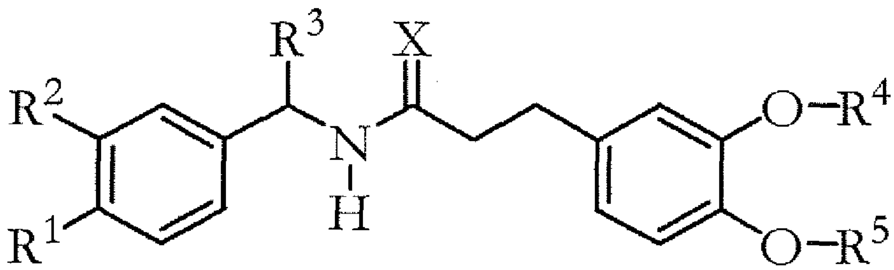
(1)

wherein,
X represents an oxygen atom or a sulfur atom,
$R^1$ represents a hydrogen atom, a halogen atom, a C1-C4 alkyl group, a C1-C4 haloalkyl group, a C2-C4 alkenyl group, a C2-C4 alkynyl group, a C1-C4 alkoxy group, a C1-C4 haloalkoxy group or a cyano group,
$R^2$ represents a hydrogen atom, a halogen atom, a C1-C4 alkyl group, a C1-C4 haloalkyl group, a C2-C4 alkenyl group or a C2-C4 alkynyl group;
or both of $R^1$ and $R^2$ are combined together to represent a C3-C5 polymethylene group or 1,3-butadiene-1,4-diyl group,
$R^3$ represents a hydrogen atom, a C1-C3 alkyl group or a cyano group,
$R^4$ represents a C1-C3 alkyl group,
$R^5$ represents a C1-C4 alkyl group, a C3-C4 alkenyl group or a C3-C4 alkynyl group;
and
(II) dimethomorph;
to plant(s) or soil where plant(s) are growing.

8. The plant diseases controlling method according to claim 7, wherein the mixing ratio of the amide compound represented by formula (1) and dimethomorph is 0.1 to 50 parts by weight of dimethomorph for 1 part by weight of the amide compound represented by formula (1).

9. The plant diseases controlling method according to claim 7 or claim 8, wherein
X is an oxygen atom or sulfur atom,
$R^1$ is a halogen atom or a C1-C2 alkyl group,
$R^2$ is a hydrogen atom, a halogen atom or a C1-C2 alkyl group; or both of $R^1$ and $R^2$ are combined together to be a C3-C4 polymethylene group or 1,3-butadiene-1,4-diyl group,
$R^3$ is a hydrogen atom,
$R^4$ is a C1-C2 alkyl group,
$R^5$ is a C3 alkynyl group
in the formula (1).

10. The plant diseases controlling method according to claim 7 or claim 8, wherein
X is an oxygen atom,
$R^1$ is a halogen atom, a halogen atom or a C1-C2 alkyl group, $R^2$ is a hydrogen atom or a halogen atom;
or both of $R^1$ and $R^2$ are combined together to be a C3-C4 polymethylene group or 1,3-butadiene-1,4-diyl group,
$R^3$ is a cyano group,
$R^4$ is a C1-C2 alkyl group,
$R^5$ is a C1-C2 alkyl group, a C3 alkenyl group or a C3 alkynyl group,
in the formula (1)

11. The plant diseases controlling method according to claim 7 or claim 8, wherein

the amide compound represented by formula (1) is N-(4-chlorobenzyl)-3-{3-methoxy-4-(2-propynyloxy)phenyl}pro panamide.

**12.** The plant diseases controlling method according to claim 7 or claim 8, wherein the amide compound represented by formula

(1) is N-{1-(4-chlorophenyl)-1-cyanomethyl}-3-{3-methoxy-4-(2-prop ynyloxy)phenyl}propanamide.

**13.** The plant diseases controlling method which comprises applying an effective amount of the composition, according to any one of claim 1 to 6, to plant(s) or soil where plant(s) are growing.

**14.** Use of the composition according to any one of claim 1 to 6 for controlling plant diseases.

European Patent Office

# EUROPEAN SEARCH REPORT

Application Number
EP 05 10 3922

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,A | WO 2004/058685 A (SUMITOMO CHEMICAL COMPANY, LIMITED; SAKAGUCHI, HIROSHI) 15 July 2004 (2004-07-15)<br>* the whole document *<br>----- | | A01N37/38 |
| A | EP 0 985 346 A (AMERICAN CYANAMID COMPANY; BASF AKTIENGESELLSCHAFT) 15 March 2000 (2000-03-15)<br>* the whole document *<br>----- | | |
| A | WO 01/87822 A (SYNGENTA PARTICIPATIONS AG; LAMBERTH, CLEMENS; ZELLER, MARTIN; KUNZ, W) 22 November 2001 (2001-11-22)<br>* the whole document *<br>----- | | |
| | | | TECHNICAL FIELDS SEARCHED (Int.Cl.7) |
| | | | A01N |

The present search report has been drawn up for all claims

| Place of search | Date of completion of the search | Examiner |
|---|---|---|
| Munich | 6 June 2005 | Bertrand, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

## ANNEX TO THE EUROPEAN SEARCH REPORT ON EUROPEAN PATENT APPLICATION NO. EP 05 10 3922

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2005

| Patent document cited in search report | Publication date | Patent family member(s) | Publication date |
|---|---|---|---|
| WO 2004058685 A | 15-07-2004 | AU 2003289438 A1 | 22-07-2004 |
| | | WO 2004058685 A1 | 15-07-2004 |
| | | JP 2004285051 A | 14-10-2004 |
| EP 0985346 A | 15-03-2000 | US 6090806 A | 18-07-2000 |
| | | AT 237931 T | 15-05-2003 |
| | | DE 69907099 D1 | 28-05-2003 |
| | | DE 69907099 T2 | 29-01-2004 |
| | | EP 0985346 A1 | 15-03-2000 |
| WO 0187822 A | 22-11-2001 | AT 271031 T | 15-07-2004 |
| | | AU 6030101 A | 26-11-2001 |
| | | AU 2001260301 B2 | 04-11-2004 |
| | | BR 0110810 A | 11-02-2003 |
| | | CA 2406088 A1 | 22-11-2001 |
| | | CN 1429198 A | 09-07-2003 |
| | | DE 60104306 D1 | 19-08-2004 |
| | | EG 22695 A | 30-06-2003 |
| | | WO 0187822 A1 | 22-11-2001 |
| | | EP 1282595 A1 | 12-02-2003 |
| | | ES 2223848 T3 | 01-03-2005 |
| | | HR 20020908 A2 | 31-12-2004 |
| | | HU 0301965 A2 | 29-09-2003 |
| | | JP 2003533502 T | 11-11-2003 |
| | | MA 25751 A1 | 01-04-2003 |
| | | MX PA02011198 A | 10-03-2003 |
| | | PL 358225 A1 | 09-08-2004 |
| | | TR 200402704 T4 | 22-11-2004 |
| | | US 6683211 B1 | 27-01-2004 |
| | | ZA 200209266 A | 20-10-2003 |

EPO FORM P0459

For more details about this annex : see Official Journal of the European Patent Office, No. 12/82